(19) Europäisches Patentamt
European Patent Office
Office européen des brevets

(11) EP 4 582 507 A1

(12) # EUROPEAN PATENT APPLICATION
published in accordance with Art. 153(4) EPC

(43) Date of publication:
**09.07.2025 Bulletin 2025/28**

(21) Application number: **23860286.6**

(22) Date of filing: **28.08.2023**

(51) International Patent Classification (IPC):
***C09K 3/16*** (2006.01) ***C08G 63/672*** (2006.01)
***C08G 83/00*** (2006.01) ***C08K 3/017*** (2018.01)
***C08L 23/00*** (2006.01) ***C08L 101/00*** (2006.01)

(52) Cooperative Patent Classification (CPC):
**C08G 63/672; C08G 83/00; C08K 3/017; C08L 23/00; C08L 101/00; C09K 3/16**

(86) International application number:
**PCT/JP2023/031002**

(87) International publication number:
**WO 2024/048524 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022 JP 2022140258**

(71) Applicant: **ADEKA CORPORATION**
**Arakawa-ku**
**Tokyo**
**116-8554 (JP)**

(72) Inventors:
- **IIMORI Yuko**
  **Tokyo 116-8554 (JP)**
- **NAGAI Miho**
  **Tokyo 116-8554 (JP)**
- **ENJO Naoki**
  **Tokyo 116-8554 (JP)**
- **OWADA Ryota**
  **Tokyo 116-8554 (JP)**

(74) Representative: **Müller-Boré & Partner Patentanwälte PartG mbB**
**Friedenheimer Brücke 21**
**80639 München (DE)**

(54) **ANTISTATIC AGENT, ANTISTATIC AGENT COMPOSITION CONTAINING SAME, ANTISTATIC RESIN COMPOSITION CONTAINING SAID ANTISTATIC AGENT OR SAID ANTISTATIC AGENT COMPOSITION, AND MOLDED BODY AND FILM THEREOF**

(57) Provided are: an antistatic agent capable of durably giving an excellent antistatic effect to a synthetic resin; an antistatic-agent composition containing the same; an antistatic resin composition containing any of these; and a molded product of and a film of the resin composition. The antistatic agent includes one or more polymer compounds (E) obtained by reaction among a diol (a1), a dicarboxylic acid (a2), a polyether (b) having a hydroxyl group at both ends, and an epoxy compound (D) having two or more epoxy groups, wherein the polyether (b) having a hydroxyl group at both ends includes a polyethylene glycol (b1) and a polytetramethylene glycol (b2), and wherein the ratio of the polytetramethylene glycol (b2) is 10 to 80 mol% to the total number of moles of the polyethylene glycol (b1) and the polytetramethylene glycol (b2).

EP 4 582 507 A1

## Description

### TECHNICAL FIELD

The present invention relates to: an antistatic agent; an antistatic-agent composition containing the same; an antistatic resin composition containing any of these (hereinafter simply referred to as a "resin composition"); and a molded product of and a film of the resin composition. The present invention relates particularly to: an antistatic agent capable of durably giving an excellent antistatic effect to a synthetic resin; an antistatic-agent composition containing the antistatic agent; an antistatic resin composition containing any of these; and a molded product of and a film of the resin composition.

### BACKGROUND ART

A synthetic resin such as a thermoplastic resin not only is light in weight and easy to process but also has excellent characteristics such as the capability to be designed as a base material in accordance with the application, and thus, is an important raw material indispensable at the present day. In addition, a thermoplastic resin has excellent electrical-insulation properties, and thus, is often utilized, for example, for components of electrical products. However, a thermoplastic resin is too electrically-insulative, and thus, has a problem of being easily electrified by friction or the like.

An electrified thermoplastic resin attracts dirt and dust from the surroundings, and thus, causes a problem of impairing the external appearance of a molded resin article. In addition, for example, a circuit in a precision device such as a computer among other electronic products is caused by electrification to fail to normally work in some cases. Furthermore, a problem due to an electric shock exists. If a resin has generated an electric shock to a human body, the shock not only causes discomfort to the human but also has the possibility of inducing an explosion accident in a place where inflammable gas or dust exists. Furthermore, on a synthetic resin film used for a package or the like for electrical and electronic machines and electrical and electronic components, static electricity generated by electrification causes an electric shock, attracts fine dirt, and thus causes trouble in such components or machines, resulting in a big problem.

For such problems to be solved, a synthetic resin has conventionally been given an antistatic treatment. The most common antistatic treatment method is a method in which an antistatic agent is added to a synthetic resin. Such an antistatic agent is a coating type of agent, which is applied to the surface of a molded resin product, or a kneading type of agent, which is added to a resin when the resin is processed and molded. The coating type of agent has poor durability, and in addition, the surface is coated with a large amount of organic material, causing a problem in that something brought into contact with the surface becomes contaminated.

From such a viewpoint, a polymer type of antistatic agent to be used for kneading mainly with a synthetic resin has conventionally been studied. For example, Patent Document 1 discloses a polyether ester amide for giving antistaticity to a polyolefin resin. In addition, Patent Document 2 discloses a block polymer having a structure in which a polyolefin block and a hydrophilic polymer block are repeatedly and alternately bound. Furthermore, Patent Document 3 discloses a polymer type of antistatic agent having a polyester block.

### RELATED ART DOCUMENTS

### PATENT DOCUMENTS

Patent Document 1: JPH03-290464A
Patent Document 2: JP2001-278985A
Patent Document 3: JP2016-23254A

### SUMMARY OF THE INVENTION

### PROBLEMS TO BE SOLVED BY THE INVENTION

However, the current situation is that these conventional antistatic agents do not necessarily have sufficient antistatic performance, and are desired to be further improved. In particular, in a case where such a conventional antistatic agent is used for a synthetic resin film, the agent has a problem of being incapable of achieving antistaticity sufficiently, and is insufficient in durability. Furthermore, such a conventional antistatic agent needs to be added in a large amount to a resin in order to achieve sufficient performance, and thus, has a problem in that any poor compatibility with a synthetic resin adversely affects the transparency of a film.

In view of this, an object of the present invention is to provide: an antistatic agent capable of durably giving an

excellent antistatic effect to a synthetic resin; an antistatic-agent composition containing the same; an antistatic resin composition containing any of these; and a molded product of and a film of the resin composition. The object is particularly to provide a film that has excellent antistaticity, is less prone to generate static electricity, is less prone to a decrease caused in commercial value by contamination due to and dirt sticking due to static electricity on the surface, and furthermore, has excellent transparency.

MEANS FOR SOLVING THE PROBLEMS

To solve the above-described problems, the present inventors have made studies vigorously, and consequently have discovered that a polymer compound having a predetermined structure can give excellent antistatic capability to a synthetic resin, further has excellent compatibility with a synthetic resin, and thus, does not adversely affect the transparency of a synthetic resin. On the basis of such a discovery, the present inventors have further made studies vigorously, and consequently have come to complete the present invention through the discovery that using the compound enables the above-described problems to be solved.

That is, an antistatic agent according to the present invention is characterized by including one or more polymer compounds (E) obtained by reaction among a diol (a1), a dicarboxylic acid (a2), a polyether (b) having a hydroxyl group at both ends, and an epoxy compound (D) having two or more epoxy groups, wherein the polyether (b) having a hydroxyl group at both ends includes a polyethylene glycol (b1) and a polytetramethylene glycol (b2), and wherein the ratio of the polytetramethylene glycol (b2) is 10 to 80 mol% to the total number of moles of the polyethylene glycol (b1) and the polytetramethylene glycol (b2).

In the antistatic agent according to the present invention, the polymer compound (E) is preferably obtained by reaction among: a polyester (a) obtained by reaction between the diol (a1) and the dicarboxylic acid (a2); the polyether (b) having a hydroxyl group at both ends; and the epoxy compound (D) having two or more epoxy groups.

In addition, in the antistatic agent according to the present invention, the polymer compound (E) preferably has a structure having a polyester block (A) composed of the polyester (a) and a polyether block (B) composed of the polyether (b), wherein the polyester block (A) and the polyether block (B) are bound via an ester bond formed by or an ether bond formed by reaction among: a hydroxyl group at or a carboxyl group at an end of the polyester (a); a hydroxyl group at an end of the polyether (b); and an epoxy group of the epoxy compound (D), or a hydroxyl group formed by reaction of the epoxy group.

Furthermore, in the antistatic agent according to the present invention, the polymer compound (E) preferably has a structure in which a block polymer (C) having a carboxyl group at both ends and the epoxy compound (D) are bound via an ester bond, wherein the block polymer (C) has the polyester block (A) and the polyether block (B) that are repeatedly and alternately bound via an ester bond.

In addition, in the antistatic agent according to the present invention, the epoxy compound (D) in the polymer compound (E) is preferably polypropylene glycol diglycidyl ether.

The antistatic-agent composition according to the present invention is characterized by being obtained by blending the antistatic agent further with one or more selected from the group consisting of alkali metal salts and ionic liquids.

The antistatic resin composition according to the present invention is characterized by being obtained by blending the antistatic agent with a synthetic resin.

In addition, an other antistatic resin composition according to the present invention is characterized by being obtained by blending the antistatic-agent composition with a synthetic resin.

In the antistatic resin composition according to the present invention, the synthetic resin is preferably a polyolefin resin.

Also in the other antistatic resin composition according to the present invention, the synthetic resin is preferably a polyolefin resin.

A molded product according to the present invention is characterized in that the synthetic resin includes an antistatic resin composition according to the present invention that is a polyolefin resin.

An other molded product according to the present invention is characterized in that the synthetic resin includes the other antistatic resin composition according to the present invention that is a polyolefin resin.

The molded product according to the present invention is suitably a film.

Also the other molded product according to the present invention is suitably a film.

EFFECTS OF THE INVENTION

The present invention can provide: an antistatic agent capable of durably giving an excellent antistatic effect to a synthetic resin; an antistatic-agent composition containing the same; an antistatic resin composition containing any of these; and a molded product of and a film of the resin composition. A film according to the present invention has excellent

antistaticity, is less prone to generate static electricity, is less prone to a decrease caused in commercial value by contamination and dirt sticking due to static electricity on the surface, and furthermore, has excellent transparency.

MODE FOR CARRYING OUT THE INVENTION

Embodiments of the present invention will be described in detail below.

An antistatic agent according to the present invention contains one or more polymer compounds (E). The polymer compound (E) is a polymer compound obtained by reaction among a diol (a1), a dicarboxylic acid (a2), a polyether (b) having a hydroxyl group at both ends, and an epoxy compound (D) having two or more epoxy groups. The polyether (b) having a hydroxyl group at both ends includes a polyethylene glycol (b1) and a polytetramethylene glycol (b2), and the ratio of the polytetramethylene glycol (b2) is 10 to 80 mol% to the total number of moles of the polyethylene glycol (b1) and the polytetramethylene glycol (b2).

From the viewpoints of antistaticity, the durability thereof, and the transparency of a film, the polymer compound (E) for an antistatic agent according to the present invention is preferably a polymer compound obtained by reaction among: a polyester (a) obtained by reaction between the diol (a1) and the dicarboxylic acid (a2); the polyether (b) having a hydroxyl group at both ends; and the epoxy compound (D) having two or more epoxy groups.

Furthermore, from the viewpoints of antistaticity, the durability thereof, and the transparency of a film, the polymer compound (E) for an antistatic agent according to the present invention more preferably has a structure having a polyester block (A) composed of a polyester (a) and a polyether block (B) composed of a polyether (b) having a hydroxyl group at both ends, wherein the polyester block (A) and the polyether block (B) are bound via an ester bond formed by or an ether bond formed by reaction among: a hydroxyl group at or a carboxyl group at an end of the polyester (a); a hydroxyl group at an end of the polyether (b); and an epoxy group of an epoxy compound (D) having two or more epoxy groups, or a hydroxyl group formed by reaction of the epoxy group. Here, the hydroxyl group formed by reaction of an epoxy group is a hydroxyl group formed by the ring-opening reaction between the epoxy group of the epoxy compound (D) and a hydroxyl group or a carboxyl group.

The polyester block (A) of the polymer compound (E) is composed of the polyester (a) obtained by reaction between the diol (a1) and the dicarboxylic acid (a2). In this regard, the polyester (a) can be obtained by esterifying the diol (a1) and the dicarboxylic acid (a2).

Examples of the diol (a1) used for the polymer compound (E) according to the present invention include aliphatic diols and aromatic-group-containing diols. The diol (a1) may be a mixture of two or more kinds of the diols.

Examples of the aliphatic diol include 1,2-ethanediol (ethylene glycol), 1,2-propanediol (propylene glycol), 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-n-butyl-2-ethyl-1,3 propanediol (3,3-dimethylolheptane), 3-methyl-1,5-pentanediol, 1,6-hexane diol, 2,2,4-trimethyl-1,3-pentanediol, 2-ethyl-1,3-hexane diol, 2-methyl-1,8-octane diol, 1,9-nonane diol, 1,10-decane diol, 1,12-octadecane diol, 1,4-cyclohexanedimethanol, hydrogenated bisphenol A, 1,2-, 1,3-, or 1,4-cyclohexane diol, cyclododecane diol, dimer diol, hydrogenated dimer diol, diethylene glycol, dipropylene glycol, and triethylene glycol. Among these aliphatic diols, 1,4-cyclohexanedimethanol and hydrogenated bisphenol A are preferable from the viewpoints of antistaticity, the durability thereof, and the transparency of a film, and 1,4-cyclohexanedimethanol is more preferable. In this regard, the aliphatic diol preferably has hydrophobicity from the viewpoints of antistaticity, the durability thereof, and the transparency of a film. Thus, use of polyethylene glycol, which has hydrophilicity, is not preferable.

Examples of the aromatic-group-containing diol include bisphenol A, 1,2-hydroxybenzene, 1,3-hydroxybenzene, 1,4-hydroxybenzene, 1,4-benzenedimethanol, an ethylene oxide adduct of bisphenol A, a propylene oxide adduct of bisphenol A, and a polyhydroxyethyl adduct of a mononuclear dihydric phenol compound such as 1,4-bis(2-hydroxyethoxy)benzene, resorcin, or pyrocatechol. Among these aromatic-group-containing diols, an ethylene oxide adduct of bisphenol A and 1,4-bis(β-hydroxyethoxy)benzene are preferable. In this regard, the aromatic diol preferably has hydrophobicity from the viewpoints of antistaticity, the durability thereof, and the transparency of a film.

Among these diols, 1,4-cyclohexanedimethanol is particularly preferable from the viewpoints of antistaticity, the durability thereof, and the transparency of a film.

Examples of the dicarboxylic acid (a2) to be used for the polymer compound (E) according to the present invention include aliphatic dicarboxylic acids and aromatic dicarboxylic acids. The dicarboxylic acid (a2) may be a mixture of two or more kinds of the dicarboxylic acids.

The aliphatic dicarboxylic acid to be used for the polymer compound (E) according to the present invention may be a derivative of an aliphatic dicarboxylic acid (for example, an acid anhydride, alkyl ester, alkali metal salt, or acid halide). The aliphatic dicarboxylic acid and the derivative thereof may each be a mixture of two or more kinds of the aliphatic dicarboxylic acids and derivatives thereof.

Preferable examples of the aliphatic dicarboxylic acid include $C_{2-20}$ aliphatic dicarboxylic acids. Examples thereof include oxalic acid, malonic acid, glutaric acid, methylsuccinic acid, dimethylmalonic acid, 3-methylglutaric acid,

ethylsuccinic acid, isopropylmalonic acid, adipic acid, pimelic acid, suberic acid, azelaic acid, sebacic acid, undecanedioic acid, dodecanedioic acid (1,10-decanedicarboxylic acid), tridecanedioic acid, tetradecanedioic acid, hexadecanedioic acid, octadecanedioic acid, eicosanedioic acid, 1,3-cyclopentanedicarboxylic acid, 1,2-cyclopentanedicarboxylic acid, 1,4-cyclohexanedicarboxylic acid, 1,2-cyclohexanedicarboxylic acid, 1,3-cyclohexanedicarboxylic acid, 1,4-cyclohexanediacetic acid, 1,3-cyclohexanediacetic acid, 1,2-cyclohexanediacetic acid, 1,1-cyclohexanediacetic acid, dimer acid, maleic acid, and fumaric acid. Among these aliphatic dicarboxylic acids, $C_{4-12}$ dicarboxylic acids are more preferable, and adipic acids are still more preferable, from the viewpoints of antistaticity, the durability thereof, and the transparency of a film.

The aromatic dicarboxylic acid to be used for the polymer compound (E) according to the present invention may be a derivative of an aromatic dicarboxylic acid (for example, an acid anhydride, alkyl ester, alkali metal salt, or acid halide). In addition, the aromatic dicarboxylic acid and the derivative thereof may each be a mixture of two or more kinds of aromatic dicarboxylic acids and derivatives thereof.

Preferable examples of the aromatic dicarboxylic acid include $C_{8-20}$ aromatic dicarboxylic acids. Examples thereof include terephthalic acid, isophthalic acid, phthalic acid, phenylmalonic acid, homophthalic acid, phenylsuccinic acid, β-phenylglutaric acid, α-phenyladipic acid, β-phenyladipic acid, biphenyl-2,2'-dicarboxylic acid, biphenyl-4,4'-dicarboxylic acid, naphthalenedicarboxylic acid, sodium 3-sulfoisophthalate, and potassium 3-sulfoisophthalate. Among these aromatic dicarboxylic acids, terephthalic acid, isophthalic acid, and phthalic acid (encompassing phthalic anhydride) are preferable, and phthalic acid (encompassing phthalic anhydride) is more preferable, from the viewpoints of antistaticity, the durability thereof, and the transparency of a film.

As the dicarboxylic acid (a2), both of an aliphatic dicarboxylic acid and an aromatic dicarboxylic acid are preferably used in combination. It is particularly preferable that an adipic acid as the aliphatic dicarboxylic acid and a phthalic acid (encompassing phthalic anhydride) as the aromatic dicarboxylic acid are used in combination.

Next, the polyether (b) having a hydroxyl group at both ends and the polyether block (B) of the polymer compound (E) will be described. The polyether block (B) is composed of the polyether (b) having a hydroxyl group at both ends. The polyether (b) having a hydroxyl group at both ends includes a polyethylene glycol (b1) and a polytetramethylene glycol (b2), and the ratio of the polytetramethylene glycol (b2) is 10 to 80 mol% to the total number of moles of the polyethylene glycol (b1) and the polytetramethylene glycol (b2).

The number-average molecular weight of the polyethylene glycol (b1) is calculated from a measurement value of a hydroxyl value, and is preferably 400 to 8,000, more preferably 1,000 to 6,000, still more preferably 1,500 to 5,000, still more preferably 1,800 to 4,000, from the viewpoints of antistaticity, the durability thereof, and the transparency of a film. A method of measuring a hydroxyl value and a method of calculating a number-average molecular weight from the hydroxyl value will be described below.

<Method of calculating number-average molecular weight from hydroxyl value>

A hydroxyl value is measured using the following method of measuring a hydroxyl value, and a number-average molecular weight (hereinafter also referred to as an "Mn") is determined in accordance with the following formula.

$$\text{Number-average molecular weight} = (56110 \times 2) / \text{hydroxyl value}$$

<Method of measuring hydroxyl value>

- Reagent A (an acetylating agent)

  (1) Triethyl phosphate, 1560 mL
  (2) Acetic anhydride, 193 mL
  (3) Perchloric acid (60%), 16 g

  The above-described reagents are mixed in the order of (1), (2), and (3).
- Reagent B
  Pyridine and pure water are mixed at a volume ratio of 3:1.
- Reagent C
  To 500 mL of isopropyl alcohol, two to three drops of phenolphthalein liquid are added, and the resulting solution is made neutral with an aqueous 1N-KOH solution.

First, 2 g of the sample is measured out into a 200 mL Erlenmeyer flask, and 10 mL of xylene is added thereto. The resulting solution is dissolved with heating. The reagent A in an amount of 15 mL is added. The flask is sealed with a stopper, and shaken vigorously. The reagent B in an amount of 20 mL is added. The flask is sealed with the stopper, and shaken vigorously. The reagent C in an amount of 50 mL is added. The resulting solution is titrated with an aqueous 1N-KOH solution, and calculation is performed in accordance with the following formula.

$$\text{Hydroxyl value [mg KOH/g]} = 56.11 \times f \times (T - B)/S$$

f: factor of aqueous 1N-KOH solution
B: blank-test titer [mL]
T: sample-test titer [mL]
S: amount of sample [g]

The number-average molecular weight of the polytetramethylene glycol (b2) is calculated from a measurement value of a hydroxyl value, and is preferably 400 to 8,000, more preferably 1,000 to 6,000, still more preferably 1,500 to 5,000, still more preferably 1,800 to 4,000, from the viewpoints of antistaticity, the durability thereof, and the transparency of a film.

A method of measuring the hydroxyl value of the polytetramethylene glycol (b2) and a method of calculating a number-average molecular weight from the hydroxyl value are the same as the method of measuring the hydroxyl value of the polyethylene glycol (a1) and the method of calculating a number-average molecular weight from the hydroxyl value respectively.

The ratios of the polyethylene glycol (b1) and the polytetramethylene glycol (b2) in the polyether (b) having a hydroxyl group at both ends are as follows: with respect to the total number of moles of the polyethylene glycol (b1) and the polytetramethylene glycol (b2), the ratio of the polytetramethylene glycol (b2) is 10 to 80 mol%, and is preferably 15 to 70 mol%, more preferably 18 to 55 mol%, still more preferably 20 to 50 mol%, from the viewpoints of antistaticity, the durability thereof, and the transparency of a film.

Next, the epoxy compound (D) having two or more epoxy groups, and included in the polymer compound (E) will be described.

The epoxy compound (D) to be used for an antistatic agent according to the present invention is not particularly limited, subject to having two or more epoxy groups. Examples include: polyglycidyl ether compounds of a mononuclear polyhydric phenol compound, such as hydroquinone, resorcin, pyrocatechol, or phloroglucinol; polyglycidyl ether compounds of a polynuclear polyhydric phenol compound, such as dihydroxynaphthalene, biphenol, methylene bisphenol (bisphenol F), methylene bis(ortho-cresol), ethylidene bisphenol, isopropylidene bisphenol (bisphenol A), isopropylidene bis(ortho-cresol), tetrabromobisphenol A, 1,3-bis(4-hydroxycumyl benzene), 1,4-bis(4-hydroxycumyl benzene), 1,1,3-tris(4-hydroxyphenyl)butane, 1,1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, or terpene phenol; polyglycidyl ethers of a polyhydric alcohol, such as ethylene glycol, propylene glycol, butylene glycol, hexane diol, diethylene glycol, polyethylene glycol, dipropylene glycol, polypropylene glycol, polyglycol, thiodiglycol, glycerin, trimethylolpropane, pentaerythritol, sorbitol, bisphenol A-ethylene oxide adduct, or dicyclopentadienedimethanol; homopolymers or copolymers of a glycidyl ester and glycidyl methacrylate, in which the glycidyl ester is a glycidyl ester of an aliphatic, aromatic, or alicyclic polybasic acid, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, or endomethylenetetrahydrophthalic acid; epoxy compounds having a glycidylamino group, such as N,N-diglycidyl aniline, bis(4-(N-methyl-N-glycidylamino)phenyl)methane, or diglycidyl ortho-toluidine; epoxidized products of a cyclic olefin compound, such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, or bis(3,4-epoxy-6-methylcyclohexylmethyl) adipate; and epoxidized conjugated diene polymers such as polybutadiene epoxide or a styrene epoxide-butadiene copolymer, heterocyclic compounds such as triglycidyl isocyanurate, and epoxidized soybean oil. In addition, such an epoxy compound may be: an epoxy compound internally-cross-linked by a prepolymer of an end isocyanate; or an epoxy compound allowed to have a higher molecular weight, using a polyvalent active hydrogen compound (a polyhydric phenol, polyamine, carbonyl-group-containing compound, polyphosphate, or the like). Two or more of such epoxy compounds (D) may be used.

From the viewpoints of antistaticity, the durability thereof, and the transparency of a film, the epoxy compound (D) is more preferably a polypropylene glycol diglycidyl ether, polyethylene glycol diglycidyl ether, bisphenol F diglycidyl ether, dicyclopentadienedimethanol diglycidyl ether, hydrogenated bisphenol A diglycidyl ether, or hexanediol diglycidyl ether preferably a polypropylene glycol diglycidyl ether, polyethylene glycol diglycidyl ether, bisphenol F diglycidyl ether, or

hydrogenated bisphenol A diglycidyl ether, still more preferably a polypropylene glycol diglycidyl ether. From the viewpoints of antistaticity, the durability thereof, and the transparency of a film, the polypropylene glycol diglycidyl ether is particularly preferably a polypropylene glycol diglycidyl ether represented by the following general formula (1).

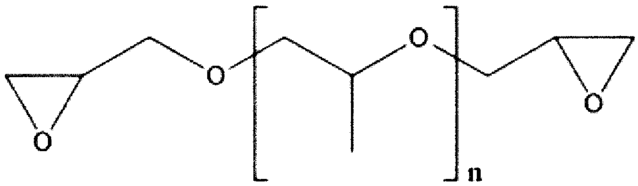

(1)

In the general formula (1), n represents a number of 1 to 30. From the viewpoints of antistaticity, the durability thereof, and the transparency of a film, n is preferably 2 to 25, more preferably 3 to 15.

From the viewpoints of antistaticity, the durability thereof, and the transparency of a film, the number-average molecular weight of the polypropylene glycol diglycidyl ether is preferably 200 to 2000, more preferably 250 to 1500, still more preferably 300 to 1000.

The polypropylene glycol diglycidyl ether to be used may be a commercially available product on the market. Examples of such a commercially available product include; ADEKA GLYCILOL (registered trademark) ED-506 manufactured by ADEKA Corporation; and DENACOL (registered trademark) EX-920 and DENACOL (registered trademark) EX-931, manufactured by Nagase ChemteX Corporation.

From the viewpoints of antistaticity, the durability thereof, and the transparency of a film, the epoxy equivalent of the epoxy compound (D) is preferably 70 to 2000, more preferably 100 to 1000, particularly more preferably 150 to 600.

From the viewpoints of antistaticity, the durability thereof, and the transparency of a film, a preferable polymer compound (E) according to the present invention is obtained by reaction among: a polyester (a) obtained by reaction between a diol (a1) and a dicarboxylic acid (a2); a polyether (b) having a hydroxyl group at both ends; and an epoxy compound (D) having two or more epoxy groups. From the viewpoints of antistaticity, the durability thereof, and the transparency of a film, the polymer compound (E) preferably has a structure having a polyester block (A) composed of the polyester (a) and a polyether block (B) composed of the polyether (b), wherein the polyester block (A) and the polyether block (B) are bound via an ester bond formed by or an ether bond formed by reaction among: a hydroxyl group at or a carboxyl group at an end of the polyester (a); a hydroxyl group at an end of the polyether (b); and an epoxy group of the epoxy compound having two or more epoxy groups, or a hydroxyl group formed by reaction of the epoxy group.

Furthermore, from the viewpoints of antistaticity, the durability thereof, and the transparency of a film, the polymer compound (E) preferably has a structure in which a block polymer (C) having a carboxyl group at both ends and an epoxy compound (D) are bound via an ester bond formed by a carboxyl group of the block polymer (C) and an epoxy group of the epoxy compound (D), wherein the block polymer (C) has a polyester block (A) composed of a polyester (a) and a polyether block (B) composed of a polyether (b) that are repeatedly and alternately bound via an ester bond. Furthermore, the polymer compound (E) preferably has a structure in which the block polymer (C) and the epoxy compound (D) are bound via an ester bond formed by reaction between: a hydroxyl group formed by ring-opening of the epoxy group allowed to react with the carboxyl group; and a carboxyl group.

The polyester (a) included in the polyester block (A) according to the present invention may be just composed of the diol (a1) and the dicarboxylic acid (a2). From the viewpoints of antistaticity, the durability thereof, and the transparency of a film, the polyester (a) preferably has a structure in which the residue resulting from excluding the hydroxyl groups from the diol (a1) and the residue resulting from excluding the carboxyl groups from the dicarboxylic acid (a2) are bound via an ester bond. From the viewpoints of antistaticity, the durability thereof, and the transparency of a film, a still more preferable polyester (a) included in the polyester block (A) according to the present invention is composed of a diol, an aliphatic dicarboxylic acid, and an aromatic dicarboxylic acid. From the viewpoints of antistaticity, the durability thereof, and the transparency of a film, the polyester (a) preferably has a structure in which the residue resulting from excluding the hydroxyl groups from a diol and the residue resulting from excluding the carboxyl groups from an aliphatic dicarboxylic acid are bound via an ester bond, and also has a structure in which the residue resulting from excluding the hydroxyl groups from the diol and the residue resulting from excluding the carboxyl groups from an aromatic dicarboxylic acid are bound via an ester bond.

In addition, from the viewpoints of antistaticity, the durability thereof, and the transparency of a film, the polyester (a) is preferably a structure having a carboxyl group at both ends. Furthermore, the degree of polymerization of the polyester (a) is suitably in the range of from 2 to 50 from the viewpoints of antistaticity, the durability thereof, and the transparency of a film.

The polyester (a) having a carboxyl group at both ends can be obtained, for example, by esterification between the above-described diol (a1) and the above-described dicarboxylic acid (a2) (preferably an aliphatic dicarboxylic acid and an aromatic dicarboxylic acid).

The aliphatic dicarboxylic acid may be a derivative of an aliphatic dicarboxylic acid (for example, an acid anhydride, alkyl ester, alkali metal salt, or acid halide). In a case where the polyester (a) is obtained using a derivative, both ends may be finally treated to have a carboxyl group, and then, the polyester (a) in this state may progress to a subsequent reaction for obtaining a block polymer (C) having a structure having a carboxyl group at both ends. In addition, the aliphatic dicarboxylic acid and the derivative thereof may each be a mixture of two or more kinds thereof.

The aromatic dicarboxylic acid may be a derivative of an aromatic dicarboxylic acid (for example, an acid anhydride, alkyl ester, alkali metal salt, or acid halide). In a case where the polyester is obtained using a derivative, both ends may be finally treated to have a carboxyl group, and then, the polyester (a) in this state may progress to a subsequent reaction for obtaining a block polymer (C) having a structure having a carboxyl group at both ends. In addition, the aromatic dicarboxylic acid and the derivative thereof may each be a mixture of two or more kinds thereof.

In a case where an aliphatic dicarboxylic acid and an aromatic dicarboxylic acid are used, the ratio of the residue resulting from excluding the carboxyl groups from the aliphatic dicarboxylic acid to the residue resulting from excluding the carboxyl groups from the aromatic dicarboxylic acid in the polyester (a) is preferably 90:10 to 99.9:0.1, more preferably 93:7 to 99.9:0.1, on a molar ratio basis, from the viewpoints of antistaticity, the durability thereof, and the transparency of a film.

The polyester (a) having a carboxyl group at both ends can be obtained, for example, by esterifying the above-described dicarboxylic acid or a derivative thereof (preferably the above-described aliphatic dicarboxylic acid or a derivative thereof and the above-described aromatic dicarboxylic acid or a derivative thereof) and the above-described diol.

The ratio of reaction of the dicarboxylic acid or a derivative thereof (preferably an aliphatic dicarboxylic acid or a derivative thereof and an aromatic dicarboxylic acid or a derivative thereof) to the diol is such that the dicarboxylic acid or a derivative thereof (preferably, an aliphatic dicarboxylic acid or a derivative thereof and an aromatic dicarboxylic acid or a derivative thereof) is preferably used excessively so as to allow both ends to be carboxyl groups, and is preferably used 1 mole excessively with respect to the diol on a molar ratio basis.

The blending ratio of the aliphatic dicarboxylic acid or a derivative thereof to the aromatic dicarboxylic acid or a derivative thereof in the esterification is preferably 90:10 to 99.9:0.1, more preferably 93:7 to 99.9:0.1, on a molar ratio basis.

In addition, depending on the blending ratio and the reaction conditions, a polyester only composed of a diol and an aliphatic dicarboxylic acid or a polyester only composed of a diol and an aromatic dicarboxylic acid is generated in some cases. In the present invention, such a polyester may be mixed in the polyester (a), or may be directly allowed to react with the compound (b) to obtain a block polymer (C).

For the esterification, a catalyst for facilitating the reaction may be used. Examples of the catalyst that can be used include conventionally known catalysts such as dibutyltin oxide, tetraalkyl titanate, zirconium acetate, and zinc acetate.

In addition, in a case where a derivative such as a carboxylate ester, carboxylic acid metal salt, or carboxylic acid halide is used in place of the dicarboxylic acid (preferably, an aliphatic dicarboxylic acid and an aromatic dicarboxylic acid), the derivative and the diol are allowed to react, and then both ends may be treated so as to have a dicarboxylic acid. The dicarboxylic acid in this state may progress to the following reaction for obtaining a block polymer (C) having a structure having a carboxyl group at both ends.

A suitable polyester (a) composed of a diol and a dicarboxylic acid (preferably, an aliphatic dicarboxylic acid and an aromatic dicarboxylic acid), and having a carboxyl group at both ends may be a polyester that forms an ester bond through reaction with the polyether (b), and forms the structure of the block polymer (C). The carboxyl groups at both ends may be protected, may be modified, or may be in the form of a precursor. In addition, to inhibit oxidation of a product during reaction, an antioxidant such as a phenol antioxidant may be added to the reaction system.

The polyether (b) having a hydroxyl group at both ends is allowed to react preferably with the polyester (a) to form an ester bond or an ether bond, preferably an ester bond, to form the structure of the block polymer (C). The hydroxyl groups at both ends may be protected, may be modified, or may be in the form of a precursor.

In a polymer compound (E) according to the present invention, the block polymer (C) having a structure having a carboxyl group at both ends has a block (A) composed of the above-described polyester (a) and a block (B) composed of the above-described polyether (b), and has a structure in which these blocks are repeatedly and alternately bound via an ester bond formed by a carboxyl group and a hydroxyl group. One example of such a block polymer (C) is, for example, a block polymer having a structure represented by the following general formula (2).

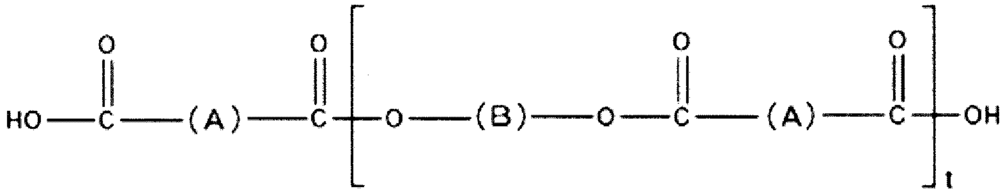

(2)

In the general formula (2), (A) represents a block composed of the polyester (a) having a carboxyl group at both ends; (B) represents a block composed of the polyether (b) having a hydroxyl group at both ends; t is the number of repetitions of the repeating unit, and preferably represents a number of 1 to 10 from the viewpoints of antistaticity, the durability thereof, and the transparency of a film. More preferably, t is a number of 1 to 7, most preferably a number of 1 to 5.

The block polymer (C) having a structure having a carboxyl group at both ends can be obtained through polycondensation between the polyester (a) having a carboxyl group at both ends and the polyether (b) having a hydroxyl group at both ends, but does not necessarily need to be synthesized from the polyester (a) and the polyether (b), subject to having the same structure as a block polymer having a structure in which the polyester (a) and the polyether (b) are repeatedly and alternately bound via an ester bond formed by a carboxyl group and a hydroxyl group.

Adjusting the ratio of reaction of the polyester (a) to the polyether (b) so that the amount of the polyester (a) can be X+1 moles with respect to X moles of the polyether (b) makes it possible to obtain a preferable block polymer (C) having a carboxyl group at both ends.

In the reaction, the polyether (b) may be added to the reaction system without isolation of the polyester (a) after completion of the synthetic reaction of the polyester (a), and be directly allowed to react.

For the polycondensation, a catalyst for facilitating the esterification may be used. Examples of the catalyst that can be used include conventionally known catalysts such as dibutyltin oxide, tetraalkyl titanate, zirconium acetate, and zinc acetate. In addition, to inhibit oxidation of a product during reaction, an antioxidant such as a phenol antioxidant may be added to the reaction system.

From the viewpoints of antistaticity, the durability thereof, and the transparency of a film, a polymer compound (E) according to the present invention preferably has a structure in which a block polymer (C) having a structure having a carboxyl group at both ends and an epoxy compound (D) having two or more epoxy groups are bound via an ester bond. The ester bond may be any one of: an ester bond formed by reaction between a carboxyl group at an end of the block polymer (C) and an epoxy group of the epoxy compound (D); and an ester bond further formed by reaction between a hydroxyl group formed by the former reaction (the reaction between the carboxyl group and the epoxy group) and a carboxyl group. The presence of both of the ester bonds is preferable from the viewpoints of antistaticity, the durability thereof, and the transparency of a film.

In addition, such a polymer compound (E) may further contain an ester bond formed by a carboxyl group of the polyester (a) and an epoxy group of the epoxy compound (D).

Furthermore, such a polymer compound (E) may contain an ester bond formed by a carboxyl group of the polyester (a) and a hydroxyl group formed by the reaction of an epoxy group of the epoxy compound.

Furthermore, such a polymer compound (E) may contain an ether bond formed by a hydroxyl group of the polyester (a) or a hydroxyl group of the polyether (b) and an epoxy group of the epoxy compound (D).

To obtain a preferable polymer compound (E), the block polymer (C) and the epoxy compound (D) may be allowed to react. That is, a carboxyl group of the block polymer (C) may be allowed to react with an epoxy group of the epoxy compound (D). Still more preferably, a hydroxyl group formed from the epoxy group allowed to react may be allowed to react with a carboxyl group. The number of epoxy groups of the epoxy compound (D) is preferably 0.5 to 5 equivalents, more preferably 0.5 to 1.5 equivalents, of the number of carboxyl groups of the block polymer (C) for the reaction. In addition, the reaction may be performed in any kind of solvent, or may be performed in a molten state.

The epoxy compound (D) having two or more epoxy groups, for the reaction, is preferably 0.1 to 2.0 equivalents, more preferably 0.2 to 1.5 equivalents, of the number of carboxyl groups of the block polymer (C) for the reaction.

In the reaction, the epoxy compound (D) may be added to the reaction system without isolation of the block polymer (C) after completion of the synthetic reaction of the block polymer (C), and be directly allowed to react. In this case, a carboxyl group of the unreacted polyester (a) used excessively in the synthesis of the block polymer (C) and part of the epoxy groups of the epoxy compound (D) may be allowed to react to form an ester bond.

A preferable polymer compound (E) according to the present invention does not necessarily need to be synthesized from the block polymer (C) having a structure having a carboxyl group at both ends and the epoxy compound (D) having two or more epoxy groups, subject to having the same structure as a polymer compound having a structure in which the block polymer (C) and the epoxy compound (D) are bound via an ester bond formed by a carboxyl group of the block polymer and an epoxy group of the epoxy compound. Here, an ester bond formed by the carboxyl group and the epoxy group encompasses an ester bond formed by the carboxyl group and a hydroxyl group formed from the epoxy group through reaction with the carboxyl group.

In addition, for a polymer compound (E) according to the present invention, it is also possible that a polyester (a) is obtained from a diol (a1) and a dicarboxylic acid (a2), and then allowed to react with a polyether (b) and/or an epoxy compound (D) without isolation of the polyester (a).

In a polymer compound (E) according to the present invention, the number-average molecular weight of the polyester (a) included in the block (A) composed of the polyester (a) is preferably 1,000 to 10,000, more preferably 1,500 to 8,000, still more preferably 2,500 to 7,500, in terms of polystyrene, from the viewpoints of antistaticity, the durability thereof, and the transparency of a film. With the number-average molecular weight at less than 1,000, the storage stability will be poorer. With the number-average molecular weight at greater than 10,000, the reaction for obtaining a polymer compound (E) will take more time, causing the economical efficiency to be poorer, and causing the resulting polymer compound to be colored through the long-time reaction.

A method of measuring a number-average molecular weight in terms of polystyrene is preferably a gel permeation chromatography (GPC) method. Such a measurement method will be described below.

<Method of measuring number-average molecular weight in terms of polystyrene>

The number-average molecular weight (hereinafter also referred to as an "Mn") is measured using a gel permeation chromatography (GPC) method. The measurement conditions for an Mn will be described below.

Device: a GPC device, manufactured by JASCO Corporation
Solvent: chloroform
Reference material: polystyrene
Detector: a differential refractometer (RI detector)
Stationary phase in column: Shodex LF-804, manufactured by Showa Denko K.K.
Column temperature: 40°C
Sample concentration: 1 mg/1 mL
Flow rate: 0.8 mL/min.
Amount of injection: 100 μL.

Furthermore, in the polymer compound (E), the number-average molecular weight of the block polymer (C) having a structure having a carboxyl group at both ends is preferably 5,000 to 50,000, more preferably 10,000 to 45,000, in terms of polystyrene, from the viewpoints of antistaticity, the durability thereof, and the transparency of a film. With the number-average molecular weight at less than 5,000, the storage stability will be poorer. With the number-average molecular weight at greater than 50,000, the reaction for obtaining a polymer compound (E) will take more time, causing the economical efficiency to be poorer, and causing the resulting polymer compound to be colored through the long-time reaction. A method of measuring a number-average molecular weight in terms of polystyrene is preferably a gel permeation chromatography (GPC) method. Such a measurement method is described above.

Next, an antistatic-agent composition according to the present invention will be described.

Blending an antistatic agent according to the present invention further with one or more selected from the group of alkali metal salts and ionic liquids results in bringing about an antistatic-agent composition having excellent antistatic performance and the durability thereof, and thus, is preferable.

First, the alkali metal salt will be described below. Examples of the alkali metal salt include salts of an organic acid or an inorganic acid. Examples of the alkali metal include lithium, sodium, potassium, cesium, and rubidium. Examples of the organic acid include: $C_{1-18}$ aliphatic monocarboxylic acids such as formic acid, acetic acid, propionic acid, butyric acid, and lactic acid; $C_{1-12}$ aliphatic dicarboxylic acids such as oxalic acid, malonic acid, succinic acid, fumaric acid, maleic acid, and adipic acid; aromatic carboxylic acids such as benzoic acid, phthalic acid, isophthalic acid, terephthalic acid, and salicylic acid; and $C_{1-20}$ sulfonic acids such as methanesulfonic acid, *p*-toluenesulfonic acid, dodecylbenzenesulfonic acid, and trifluoromethanesulfonic acid. Examples of the inorganic acid include hydrochloric acid, hydrobromic acid, sulfuric acid, sulfurous acid, phosphoric acid, phosphorous acid, polyphosphoric acid, nitric acid, and perchloric acid. Among these, salts of lithium, sodium, and potassium are preferable, and sodium is more preferable, from the viewpoints of friction-charged electrostatic potential, surface resistivity, and safety to organisms and the environment. In addition, from the viewpoints of antistaticity and the durability thereof, an acetic acid salt, perchloric acid salt, *p*-toluenesulfonic acid salt, and dodecylbenzenesulfonic acid salt are preferable, and a dodecylbenzenesulfonic acid salt is more preferable. The alkali metal salt may include two or more kinds thereof.

Specific examples of the alkali metal salt include lithium acetate, sodium acetate, potassium acetate, lithium chloride, sodium chloride, potassium chloride, lithium phosphate, sodium phosphate, potassium phosphate, lithium sulfate, sodium sulfate, lithium perchlorate, sodium perchlorate, potassium perchlorate, lithium *p*-toluenesulfonate, sodium p-toluenesulfonate, potassium *p*-toluenesulfonate, lithium dodecylbenzenesulfonate, sodium dodecylbenzenesulfonate, and potassium dodecylbenzenesulfonate. Among these, lithium *p*-toluenesulfonate, sodium *p*-toluenesulfonate, lithium dodecylbenzenesulfonate, sodium dodecylbenzenesulfonate, and the like are preferable, and sodium dodecylbenzenesulfonate is most preferable, from the viewpoints of antistaticity, the durability thereof, and safety to organisms and the environment.

The alkali metal salt may be blended with the polymer compound (E) that is an antistatic agent according to the present invention, or may be blended with a synthetic resin together with the polymer compound (E), and used. The blending amount of the alkali metal salt is preferably 0.01 to 20 parts by mass, more preferably 0.1 to 15 parts by mass, still more preferably 3.0 to 13 parts by mass, still more preferably 5.0 to 12 parts by mass, with respect to 100 parts by mass of the polymer compound (E), from the viewpoints of antistaticity, the durability thereof, and the transparency of a film.

Next, the ionic liquid will be described.

The ionic liquid is, for example, an ambient-temperature molten salt having a melting point of 100°C or less, having an organic ion as at least one of a cation or an anion included in the ionic liquid, and having an initial conductance of 1 to 200 ms/cm, preferably 10 to 200 ms/cm, and is, for example, an ambient-temperature molten salt described in WO 95/15572.

Examples of the cation included in the ionic liquid include cations selected from the group consisting of an amidinium cation, pyridinium cation, pyrazolium cation, and guanidinium cation. Among these, examples of the amidinium cation include the following.

(1) Imidazolinium cations
$C_{5-15}$ imidazolinium cations, for example, 1,2,3,4-tetramethylimidazolinium and 1,3-dimethylimidazolinium;
(2) Imidazolium cations
$C_{5-15}$ imidazolium cations, for example, 1,3-dimethylimidazolium and 1-ethyl-3-methylimidazolium;
(3) Tetrahydropyrimidinium cations
$C_{6-15}$ tetrahydropyrimidinium cations, for example, 1,3-dimethyl-1,4,5,6-tetrahydropyrimidinium and 1,2,3,4-tetramethyl-1,4,5,6-tetrahydropyrimidinium; and
(4) Dihydropyrimidinium cations
$C_{6-20}$ dihydropyrimidinium cations, for example, 1,3-dimethyl-1,4-dihydropyrimidinium, 1,3-dimethyl-1,6-dihydropyrimidinium, 8-methyl-1,8-diazabicyclo[5,4,0]-7,9-undecadienium, and 8-methyl-1,8-diazabicyclo[5,4,0]-7,10-undecadienium.

Examples of the pyridinium cation include $C_{6-20}$ pyridinium cations such as 3-methyl-1-propylpyridinium and 1-butyl-3,4-dimethylpyridinium.

Examples of the pyrazolium cation include $C_{5-15}$ pyrazolium cations such as 1,2-dimethylpyrazolium and 1-*n*-butyl-2-methylpyrazolium.

Examples of the guanidinium cation include the following.

(1) Guanidinium cations having an imidazolinium skeleton
$C_{8-15}$ guanidinium cations, for example, 2-dimethylamino-1,3,4-trimethylimidazolinium and 2-diethylamino-1,3,4-trimethylimidazolinium;
(2) Guanidinium cations having an imidazolium skeleton
$C_{8-15}$ guanidinium cations, for example, 2-dimethylamino-1,3,4-trimethylimidazolium and 2-diethylamino-1,3,4-trimethylimidazolium;
(3) Guanidinium cations having a tetrahydropyrimidinium skeleton
$C_{10-20}$ guanidinium cations, for example, 2-dimethylamino-1,3,4-trimethyl-1,4,5,6-tetrahydropyrimidinium and 2-diethylamino-1,3-dimethyl-4-ethyl-1,4,5,6-tetrahydropyrimidinium; and
(4) Guanidinium cations having a dihydropyrimidinium skeleton
$C_{10-20}$ guanidinium cations, for example, 2-dimethylamino-1,3,4-trimethyl-1,4-dihydropyrimidinium, 2-dimethylamino-1,3,4-trimethyl-1,6-dihydropyrimidinium, 2-diethylamino-1,3-dimethyl-4-ethyl-1,4-dihydropyrimidinium, and 2-diethylamino-1,3-dimethyl-4-ethyl-1,6-dihydropyrimidinium.

The above-described cations may be used singly, or may be used in combination of two or more kinds thereof. Among these, amidinium cations are preferable, imidazolium cations are more preferable, and 1-ethyl-3-methylimidazolium cations are particularly preferable, from the viewpoints of friction-charged electrostatic potential and surface resistivity.

Examples of the organic acid or inorganic acid included in the anion in the ionic liquid include the following. Examples of the organic acid include carboxylic acid, sulfate, sulfonic acid, and phosphate. Examples of the inorganic acid include superacids (for example, borofluoric acid, tetrafluoroboric acid, perchloric acid, hexafluorophosphoric acid, hexafluoroantimonic acid, and hexafluorophoarsenic acid), phosphoric acid, and boric acid. The organic acids and inorganic acids may be used singly, or may be used in combination of two or more kinds thereof.

Among these organic acids and inorganic acids, acids that form a conjugate base of superacid or an anion other than a conjugate base of superacid, in which the anion included in the ionic liquid has a Hammett acidity function ($-H_0$) of 12 to 100, and mixtures of such acids are preferable from the viewpoints of the antistaticity of the ionic liquid and the durability of the antistaticity.

Examples of the anion other than the conjugate base of a superacid include halogen (for example, fluorine, chlorine, and bromine) ions, alkyl($C_{1-12}$)benzene sulfonic acid (for example, p-toluenesulfonic acid and dodecylbenzenesulfonic acid) ions, and poly(n = 1 to 25)fluoroalkanesulfonic acid (for example, undecafluoropentanesulfonic acid) ions.

In addition, examples of the superacid include protonic acids, superacids derived from a combination of a protonic acid and a Lewis acid, and mixtures thereof. Examples of the protonic acid as a superacid include bis(trifluoromethylsulfonyl)imide acid, bis(pentafluoroethylsulfonyl)imide acid, tris(trifluoromethylsulfonyl)methane, perchloric acid, fluorosulfonic acid, alkane ($C_{1-30}$) sulfonic acid (for example, methanesulfonic acid and dodecanesulfonic acid), poly(n = 1 to 30)fluoroalkane ($C_{1-30}$) sulfonic acid (for example, trifluoromethanesulfonic acid, pentafluoroethanesulfonic acid, heptafluoropropanesulfonic acid, nonafluorobutanesulfonic acid, undecafluoropentanesulfonic acid, and tridecafluorohexanesulfonic acid), borofluoric acid, and tetrafluoroboric acid. Among these, borofluoric acid, trifluoromethanesulfonic acid, bis(trifluoromethanesulfonyl)imide acid, and bis(pentafluoroethylsulfonyl)imide acid are preferable from the viewpoint of easiness of synthesis.

Examples of the protonic acid to be used in combination with a Lewis acid include hydrogen halides (for example, hydrogen fluoride, hydrogen chloride, hydrogen bromide, and hydrogen iodide), perchloric acid, fluorosulfonic acid, methanesulfonic acid, trifluoromethanesulfonic acid, pentafluoroethanesulfonic acid, nonafluorobutanesulfonic acid, undecafluoropentanesulfonic acid, tridecafluorohexanesulfonic acid, and mixtures thereof. Among these, hydrogen fluoride is preferable from the viewpoint of the initial conductance of the ionic liquid.

Examples of Lewis acid include boron trifluoride, phosphorus pentafluoride, antimony pentafluoride, arsenic pentafluoride, tantalum pentafluoride, and mixtures thereof. Among these, boron trifluoride and phosphorus pentafluoride are preferable from the viewpoint of the initial conductance of the ionic liquid.

The combination of the protonic acid and the Lewis acid is arbitrary. Examples of the superacid composed of the combination include tetrafluoroboric acid, hexafluorophosphoric acid, hexafluorotantalic acid, hexafluoroantimonic acid, hexafluorotantalum sulfonic acid, tetrafluoroboric acid, hexafluorophosphoric acid, chlorotrifluoroboric acid, hexafluorophoarsenic acid, and mixtures thereof.

Among the anions, conjugate bases of a superacid (a superacid composed of a protonic acid and a superacid composed of a combination of the protonic acid and the Lewis acid) are preferable, and conjugate bases of a superacid composed of the protonic acid and a superacid composed of the protonic acid, boron trifluoride, and/or phosphorus pentafluoride are more preferable, from the viewpoint of the antistaticity of the ionic liquid.

Among the ionic liquids, an ionic liquid having an amidinium cation is preferable, an ionic liquid having a 1-ethyl-3-methyl imidazolium cation is more preferable, and 1-ethyl-3-methylimidazolium bis(trifluoromethanesulfonyl)imide is particularly preferable, from the viewpoint of antistaticity.

The ionic liquid may be blended with the polymer compound (E) that is an antistatic agent according to the present invention, or may be blended with a synthetic resin together with the polymer compound (E), and used. The blending amount of the ionic liquid is preferably 0.01 to 20 parts by mass, more preferably 0.1 to 15 parts by mass, most preferably 1 to 12 parts by mass, with respect to 100 parts by mass of the polymer compound (E), from the viewpoints of antistaticity, the durability thereof, and the transparency of a film.

The alkali metal salt and the ionic liquid may be used in combination.

To obtain an antistatic-agent composition according to the present invention, the polymer compound (E) and one or more selected from the group of the alkali metal salts and the ionic liquids are further mixed with another optional component, if desired. For the mixing, any kind of mixer may be used. The mixing may be performed with heating. Examples of the mixer that can be used include a tumbler mixer, Henschel mixer, ribbon blender, V-type mixer, W-type mixer, super mixer, and Nauta mixer. In addition, in the synthetic reaction of the polymer compound (E), one or more selected from the group of the alkali metal salts and the ionic liquids may be added to the reaction system.

In addition, an antistatic agent according to the present invention may be blended with a salt of a Group 2 element, and used as an antistatic-agent composition having antistaticity, to the extent of not impairing the effects of the present invention. Examples of the salt of a Group 2 element include a salt of an organic acid or an inorganic acid. Examples of the Group 2 element include beryllium, magnesium, calcium, strontium, and barium. Examples of the organic acid include: $C_{1-18}$ aliphatic monocarboxylic acids such as formic acid, acetic acid, propionic acid, butyric acid, and lactic acid; $C_{1-12}$ aliphatic dicarboxylic acids such as oxalic acid, malonic acid, succinic acid, fumaric acid, maleic acid, and adipic acid; aromatic carboxylic acids such as benzoic acid, phthalic acid, isophthalic acid, terephthalic acid, and salicylic acid; and $C_{1-20}$ sulfonic acids such as methanesulfonic acid, p-toluenesulfonic acid, dodecylbenzenesulfonic acid, and trifluoromethanesulfonic acid. Examples of the inorganic acid include hydrochloric acid, hydrobromic acid, sulfuric acid, sulfurous acid, phosphoric acid, phosphorous acid, polyphosphoric acid, nitric acid, and perchloric acid.

The salt of a Group 2 element may be blended with the polymer compound (E), or may be blended with a synthetic

resin together with the polymer compound (E), and used. The blending amount of the salt of a Group 2 element is preferably 0.01 to 20 parts by mass, more preferably 0.1 to 15 parts by mass, most preferably 3.0 to 12 parts by mass, with respect to 100 parts by mass of the polymer compound (E).

In addition, an antistatic agent according to the present invention may be blended with a surfactant, and used as an antistatic-agent composition having antistaticity, to the extent of not impairing the effects of the present invention. As the surfactant, a nonionic, anionic, cationic, or zwitterionic surfactant can be used.

Examples of the nonionic surfactant include: polyethylene glycol nonionic surfactants such as higher alcohol ethylene oxide adducts, fatty acid ethylene oxide adducts, higher alkylamine ethylene oxide adducts, and polypropylene glycol ethylene oxide adducts; and polyhydric alcohol nonionic surfactants such as polyethylene oxide, fatty acid esters of glycerin, fatty acid esters of pentaerythrite, fatty acid esters of sorbit or sorbitan, alkyl ethers of polyhydric alcohol, and aliphatic amides of alkanolamine.

Examples of the anionic surfactant include carboxylate salts such as alkali metal salts of higher fatty acid; sulfate ester salts such as higher alcohol sulfate ester salts and higher alkyl ether sulfate ester salts; sulfonate salts such as alkylbenzenesulfonate salts, alkylsulfonate salts, and paraffinsulfonate salt; and phosphate ester salts such as higher alcohol phosphate ester salt.

Examples of the cationic surfactant include quaternary ammonium salts such as alkyltrimethyl ammonium salt.

Examples of the zwitterionic surfactant include: amino acid zwitterionic surfactants such as higher alkylaminopropionate salt; and betaine zwitterionic surfactants such as higher alkyl dimethyl betaine and higher alkyl dihydroxyethyl betaine.

These may be used singly or in combination of two or more kinds thereof. Among these surfactants in the present invention, anionic surfactants are preferable, and sulfonate, salts such as alkylbenzenesulfonate salt, alkylsulfonate salt, and paraffinsulfonate salt, are particularly preferable.

The surfactant may be blended with the polymer compound (E), or may be blended with a synthetic resin together with the polymer compound (E), and used. The blending amount of the surfactant is preferably 0.01 to 20 parts by mass, more preferably 0.1 to 15 parts by mass, most preferably 1 to 10 parts by mass, with respect to 100 parts by mass of the polymer compound (E).

Furthermore, an antistatic agent according to the present invention may be blended with a polymer antistatic agent, and used as an antistatic-agent composition having antistaticity, to the extent of not impairing the effects of the present invention. Examples of the polymer antistatic agent that can be used include polymer antistatic agents such as known polyether ester amides. Examples of the known polyether ester amide include a polyether ester amide described in JPH-07-10989A, the polyether ester amide composed of a polyoxyalkylene adduct of bisphenol A. In addition, a block polymer having a structure having 2 to 50 repeated bonding units of a polyolefin block and a hydrophilic polymer block can be used. Examples include a block polymer described in US6552131B1.

The polymer antistatic agent may be blended with the polymer compound (E), or may be blended with a synthetic resin together with the polymer compound (E) according to the present invention, and used. The blending amount of the polymer antistatic agent is preferably 0 to 50 parts by mass, more preferably 5 to 20 parts by mass, with respect to 100 parts by mass of the polymer compound (E).

Furthermore, an antistatic agent according to the present invention may be blended with a compatibilizer to become an antistatic-agent composition having antistaticity, to the extent of not impairing the effects of the present invention. Blending in a compatibilizer makes it possible to enhance compatibility between the polymer compound (E) and another component or a thermoplastic resin. Examples of such a compatibilizer include: a modified vinyl polymer having at least one functional group (polar group) selected from the group consisting of a carboxyl group, epoxy group, amino group, hydroxyl group, and polyoxyalkylene group. The modified vinyl polymer is, for example: a polymer described in JPH03-258850A; a modified vinyl polymer described in JPH06-345927A, the modified vinyl polymer having a sulfonyl group; or a block polymer having a polyolefin moiety and an aromatic vinyl polymer moiety.

Examples of a still more preferable compatibilizer include one or more acid anhydride modified polyolefins. The acid anhydride modified polyolefin is a polymer in which an acid anhydride such as maleic anhydride is grafted to polyolefin. Examples of the polyolefin moiety of the acid anhydride modified polyolefin include a polymer or copolymer of ethylene, propylene, $\alpha$-olefin, or diene. Examples of the $\alpha$-olefin include 1-butene, 4-methyl-1-pentene, 1-pentene, 1-octene, 1-decene, and 1-dodecene. Examples of the diene include butadiene, isoprene, cyclopentadiene, and 1,11-dodecadiene. In addition, the polyolefin may contain a copolymerization component other than these. More specific examples include polyethylene, polypropylene, an ethylene/propylene copolymer, ethylene/propylene/diene terpolymer, ethylene/1-butene copolymer, ethylene/vinyl acetate copolymer, and mixtures thereof. Among these, a polymer or copolymer of ethylene, propylene, $C_{4-12}$ $\alpha$-olefin, butadiene, or isoprene is preferable from the viewpoints of antistaticity, the durability thereof, and the transparency of a molded product. A polymer or copolymer of ethylene, propylene, $C_{4-8}$ $\alpha$-olefin, or butadiene is more preferable. A polymer or copolymer of ethylene, propylene, or butadiene is still more preferable.

The acid anhydride is, for example, maleic anhydride or itaconic anhydride, preferably maleic anhydride from the

viewpoints of antistaticity, the durability thereof, and the transparency of a molded product. The acid anhydride modified polyolefin is preferably maleic anhydride modified polyolefin, more preferably maleic anhydride modified polypropylene, from the viewpoints of antistaticity, the durability thereof, and the transparency of a molded product. An acid anhydride modified polyolefin may be obtained by grafting an acid anhydride such as maleic anhydride to a polyolefin, using a conventional known method. Alternatively, any kind of commercially available product may be used.

The compatibilizer may be blended with the polymer compound (E) according to the present invention, or may be blended with a synthetic resin together with the polymer compound (E), and used. The blending amount of the compatibilizer is preferably 0.1 to 15 parts by mass, more preferably 1 to 10 parts by mass, with respect to 100 parts by mass of the polymer compound (E).

A composition according to the present invention may be blended with another component that is an optional component other than the polymer compound (E) and the above-described components, to the extent of not impairing the effects of the present invention. Such another component may be blended directly with the composition, or may be blended with a synthetic resin in a case where the polymer compound (E) or a composition according to the present invention is blended with a synthetic resin such as a thermoplastic resin, and used as a resin composition having antistaticity.

Next, an antistatic resin composition according to the present invention will be described.

Another resin composition according to the present invention is obtained by blending an antistatic agent according to the present invention or an antistatic-agent composition according to the present invention with a synthetic resin. The synthetic resin is preferably a thermoplastic resin.

Examples of the thermoplastic resin include: polyolefin resins and copolymers thereof, examples of which polyolefin resins include α-olefin polymers such as polypropylene, high-density polyethylene, low-density polyethylene, linear low-density polyethylene, cross-linked polyethylene, ultrahigh molecular weight polyethylene, polybutene-1, poly-3-methylpentene, and poly-4-methylpentene, or include ethylene-vinyl acetate copolymers, ethylene-ethyl acrylate copolymers, and ethylene-propylene copolymers; halogen-containing resins such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylate ester copolymer, vinyl chloride-maleate ester copolymers, and vinyl chloride-cyclohexyl maleimide copolymers; copolymers (for example, AS resin, ABS (acrylonitrile butadiene styrene copolymer) resin, ACS resin, SBS resin, MBS resin, and heat-resistant ABS resin) between petroleum resin, coumarone resin, polystyrene, polyvinyl acetate, acryl resin, styrene, and/or α-methylstyrene and another monomer (for example, maleic anhydride, phenyl maleimide, methyl methacrylate, butadiene, or acrylonitrile); polymethyl methacrylate, polyvinyl alcohol, polyvinyl formal, and polyvinyl butyral; aromatic polyesters and linear polyesters such as polytetramethylene terephthalate, examples of which aromatic polyesters include polyalkylene terephthalates such as polyethylene terephthalate, polybutylene terephthalate, and polycyclohexane dimethylene terephthalate, and include polyalkylene naphthalate such as polyethylene naphthalate and polybutylene naphthalate; degradable aliphatic polyesters such as polyhydroxy butyrate, polycaprolactone, polybutylene succinate, polyethylene succinate, polylactic acid, polymalic acid, polyglycol acid, polydioxane, and poly(2-oxetanone); and polyamides such as polyphenylene oxide, polycaprolactam, and polyhexamethylene adipamide, thermoplastic resins such as polycarbonate, polycarbonate/ABS resin, branched polycarbonate, polyacetal, polyphenylene sulfide, polyurethane, cellulose resin, polyimide resin, polysulfone, polyphenylene ether, polyether ketone, polyether ether ketone, and liquid crystal polymer, and blends of the thermoplastic resins.

In addition, in a resin composition according to the present invention, the thermoplastic resin may be an elastomer such as isoprene rubber, butadiene rubber, acrylonitrile-butadiene copolymerized rubber, styrene-butadiene copolymerized rubber, fluorine rubber, silicone rubber, olefin elastomer, styrene elastomer, polyester elastomer, nitrile elastomer, nylon elastomer, vinyl chloride elastomer, poly amide elastomer, or polyurethane elastomer. For a resin composition according to the present invention, these thermoplastic resins may be used singly, or may be used in combination of two or more kinds thereof. In addition, the thermoplastic resin may be alloyed.

These thermoplastic resins can be used, regardless of the molecular weight, degree of polymerization, density, softening point, ratio of an insoluble component in a solvent, degree of stereoregularity, presence or absence of a catalyst residue, kind and blending ratio of a monomer as a raw material, kind of a polymerization catalyst (for example, a Ziegler catalyst, metallocene catalyst, or the like), and the like. Among these thermoplastic resins, one or more selected from the group consisting of polyolefin resins, polystyrene resins, and copolymers thereof are preferable from the viewpoint of antistaticity.

In addition, in a case where an antistatic agent according to the present invention or an antistatic-agent composition according to the present invention is used with the polyolefin resin, and made into a film, the film is excellent from the viewpoints of antistaticity, the durability thereof, and transparency, and thus, is preferable. Examples of the polyolefin resin include: polyolefin resins and copolymers thereof, examples of which polyolefin resins include α-olefin polymers such as polypropylene, high-density polyethylene, low-density polyethylene, linear low-density polyethylene, cross-linked polyethylene, ultrahigh molecular weight polyethylene, polybutene-1, poly-3-methylpentene, and poly-4-methylpentene, or include ethylene-vinyl acetate copolymers, ethylene-ethyl acrylate copolymers, and ethylene-propylene copolymers. These films are suitable for packages and the like for electrical and electronic components, electrical and electronic products, precision components, precision machines, precision products, and the like.

The blending amount of an antistatic agent according to the present invention with respect to the synthetic resin is preferably 0.9 to 90 parts by mass, more preferably 1.8 to 55 parts by mass, still more preferably 4.5 to 45 parts by mass, with respect to 100 parts by mass of the synthetic resin, from the viewpoints of antistaticity, the durability thereof, and the transparency of the film.

In addition, the blending amount of an antistatic-agent composition according to the present invention with respect to the synthetic resin is preferably 1.0 to 100 parts by mass, more preferably 2.0 to 60 parts by mass, still more preferably 5.0 to 50 parts by mass, with respect to 100 parts by mass of the synthetic resin, from the viewpoints of antistaticity, the durability thereof, and the transparency of a film.

A method to be used to blend an antistatic agent according to the present invention with a synthetic resin is not particularly limited, and can be any method that is commonly used. For example, the blending may be performed by mixing and kneading, using a roll kneader, bumper kneader, extruder, kneader, or the like. In addition, an antistatic agent according to the present invention may be directly added to a synthetic resin. If desired, a support impregnated with the agent may be added. For the impregnation, the support and the agent may be directly mixed with heating. If desired, it is possible to use a method in which the agent may be diluted with an organic solvent, then the support is impregnated with the resulting solution, and then, the solvent is removed. As such a support, a support known as a filler or bulking agent for synthetic resin, or a flame retardant or light stabilizer that is solid at ambient temperature can be used. Examples include: calcium silicate powder, silica powder, talc powder, alumina powder, and titanium oxide powder; these supports the surface of which is chemically-modified; and solid supports among the below-described flame retardants and solid antioxidants. Among these supports, supports the surface of which is chemically-modified are preferable, and silica powder the surface of which is chemically-modified is more preferable. These supports preferably have an average particle size of 0.1 to 100 μm, more preferably 0.5 to 50 μm.

In a method of blending an antistatic agent according to the present invention with a synthetic resin, a block polymer (C) and an epoxy compound (D) having two or more epoxy groups may be simultaneously kneaded with a synthetic resin to synthesize, and blend in, a polymer compound (E) as an antistatic agent according to the present invention, during which one or more selected from the group of alkali metal salts and ionic liquids may be further kneaded together simultaneously. Alternatively, during molding such as injection molding, an antistatic agent according to the present invention and a synthetic resin may be mixed and blended in using a method of obtaining a molded article, during which one or more selected from the group of alkali metal salts and ionic liquids may be further blended in. Furthermore, a masterbatch of an antistatic agent according to the present invention and a synthetic resin may be preliminarily produced and then blended in, during which one or more selected from the group of alkali metal salts and ionic liquids may be blended in.

If desired, to a resin composition according to the present invention, any kind of additive such as a phenol antioxidant, phosphorus antioxidant, thioether antioxidant, ultraviolet absorber, or hindered amine light stabilizer can be further added, thus making it possible to stabilize a resin composition according to the present invention.

Any kind of additive such as the antioxidant may be blended with an antistatic-agent composition according to the present invention before being blended with a synthetic resin. Furthermore, such an additive may be blended during production of the polymer compound (E) that is an antistatic agent according to the present invention. Blending in an antioxidant in particular during production of the polymer compound (E) can prevent oxidation degradation of the polymer compound (E) in production, and thus, is preferable.

Examples of the phenol antioxidant include 2,6-di-tertiary-butyl-*p*-cresol, 2,6-diphenyl-4-octadecyloxyphenol, distearyl(3,5-di-tertiary-butyl-4-hydroxybenzyl)phosphonate, 1,6-hexamethylenebis[(3,5-di-tertiary-butyl-4-hydroxyphenyl)propionic acid amide], 4,4'-thiobis(6-tertiary-butyl-*m*-cresol), 2,2'-methylenebis(4-methyl-6-tertiary-butylphenol), 2,2'-methylenebis(4-ethyl-6-tertiary-butylphenol), 4,4'-butylidenebis(6-tertiary-butyl-*m*-cresol), 2,2'-ethylidenebis(4,6-di-tertiary-butylphenol), 2,2'-ethylidenebis(4-secondary-butyl-6-tertiary-butylphenol), 1,1,3-tris(2-methyl-4-hydroxy-5-tertiary-butylphenyl)butane, 1,3,5-tris(2,6-dimethyl-3-hydroxy-4-tertiary-butylbenzyl)isocyanurate, 1,3,5-tris(3,5-di-tertiary-butyl-4-hydroxybenzyl)isocyanurate, 1,3,5-tris(3,5-di-tertiary-butyl-4-hydroxy benzyl)-2,4,6-trimethylbenzene, 2-tertiary-butyl-4-methyl-6-(2-acryloyloxy-3-tertiary-butyl-5-methylbenzyl)phenol, stearyl(3,5-di-tertiary-butyl-4-hydroxyphenyl)propionate, tetrakis[methyl 3-(3,5-di-tertiary-butyl-4-hydroxyphenyl)propionate]methane, thiodiethylene glycol bis[(3,5-di-tertiary-butyl-4-hydroxyphenyl)propionate], 1,6-hexamethylene bis[(3,5-di-tertiary-butyl-4-hydroxyphenyl) propionate], bis[3,3-bis(4-hydroxy-3-tertiary-butylphenyl)butyric acid] glycol ester, bis[2-tertiary-butyl-4-methyl-6-(2-hydroxy-3-tertiary-butyl-5-methylbenzyl)phenyl] terephthalate, 1,3,5-tris[(3,5-di-tertiary-butyl-4-hydroxy phenyl)propionyloxyethyl] isocyanurate, 3,9-bis[1,1-dimethyl-2-{(3-tertiary-butyl-4-hydroxy-5-methylphenyl)propionyloxy } ethyl]-2,4,8,10-tetraoxaspiro[5,5]undecane, triethylene glycol bis[(3-tertiary-butyl-4-hydroxy-5-methylphenyl) propionate]. The additive amount of such a phenol antioxidant is preferably 0.001 to 10 parts by mass, more preferably 0.05 to 5 parts by mass, with respect to 100 parts by mass of the synthetic resin.

Examples of the phosphorus antioxidant include trisnonylphenylphosphite, tris[2-tertiary-butyl-4-(3-tertiary-butyl-4-hydroxy-5-methylphenylthio)-5-methylphenyl]phosphite, tridecylphosphite, octyldiphenylphosphite, di(decyl) monophenylphosphite, di(tridecyl)pentaerythritoldiphosphite, di(nonylphenyl)pentaerythritoldiphosphite, bis(2,4-di-tertiary-butylphenyl)pentaerythritoldiphosphite, bis(2,6-di-tertiary-butyl-4-methylphenyl)pentaerythritoldiphosphite, bis(2,4,6-tri-tertiary-butylphenyl)pentaerythritoldiphosphite, bis(2,4-dicumylphenyl)pentaerythritoldiphosphite, tetra(tridecyl)isopropylidenediphenoldiphosphite, tetra(tridecyl)-4,4'-n-butylidenebis(2-tertiary-butyl-5-methylphenol)diphosphite, hexa(tridecyl)-1,1,3-tris(2-methyl-4-hydroxy-5-tertiary-butylphenyl)butanetriphosphite, tetrakis(2,4-di-tertiary-butylphenyl)biphenylenediphosphonite, 9,10-dihydro-9-oxa-10-phosphaphenanthrene-10-oxide, 2,2'-methylenebis(4,6-tertiary-butylphenyl)-2-ethylhexylphosphite, 2,2'-methylenebis(4,6-tertiary-butylphenyl)-octadecylphosphite, 2,2'-ethylidenebis(4,6-di-tertiary-butylphenyl)fluorophosphite, tris(2-[(2,4,8,10-tetrakis-tertiary-butyldibenzo[d,f][1,3,2]dioxaphosphepin-6-yl)oxy]ethyl)amine, and phosphite of 2-ethyl-2-butylpropylene glycol and 2,4,6-tri-tertiary-butylphenol. The additive amount of such a phosphorus antioxidant is preferably 0.001 to 10 parts by mass, more preferably 0.05 to 5 parts by mass, with respect to 100 parts by mass of the synthetic resin.

Examples of the thioether antioxidant include dialkyl thiodipropionates such as dilauryl thiodipropionate, dimyristyl thiodipropionate, and distearyl thiodipropionate, and include pentaerythritol tetra(β-alkylthiopropionic acid) esters. The additive amount of such a thioether antioxidant is preferably 0.001 to 10 parts by mass, more preferably 0.05 to 5 parts by mass, with respect to 100 parts by mass of the synthetic resin.

Examples of the ultraviolet absorber include: 2-hydroxy benzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tertiary-butylphenyl)-5-chlorobenzotriazole, 2-(2'-hydroxy-3'-tertiary-butyl-5'-methylphenyl)-5-chlorobenzotriazole, 2-(2'-hydroxy-5'-tertiary-octylphenyl)benzotriazole, 2-(2'-hydroxy-3',5'-dicumylphenyl)benzotriazole, and 2,2'-methylenebis(4-tertiary-octyl-6-(benzotriazolyl)phenol), 2-(2'-hydroxy-3'-tertiary-butyl-5'-carboxyphenyl)benzotriazole; benzoates such as phenyl salicylate, resorcinol monobenzoate, 2,4-di-tertiary-butylphenyl-3,5-di-tertiary-butyl-4-hydroxybenzoate, 2,4-di-tertiary-amylphenyl-3,5-di-tertiary-butyl-4-hydroxybenzoate, and hexadecyl-3,5-di-tertiary-butyl-4-hydroxybenzoate; substituted oxanilides such as 2-ethyl-2'-ethoxyoxanilide and 2-ethoxy-4'-dodecyl oxanilide; cyano acrylates such as ethyl-α-cyano-β, β-diphenyl acrylate, and methyl-2-cyano-3-methyl-3-(p-methoxy phenyl) acrylate; and triaryltriazines such as 2-(2-hydroxy-4-octoxyphenyl)-4,6-bis(2,4-di-tertiary-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tertiary-butylphenyl)-s-tri azine. The additive amount of such an ultraviolet absorber is preferably 0.001 to 30 parts by mass, more preferably 0.05 to 10 parts by mass, with respect to 100 parts by mass of the synthetic resin.

Examples of the hindered amine light stabilizer include hindered amine compounds such as 2,2,6,6-tetra methyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetra carboxylate, tetrakis(1,2,2,6,6-pentamethyl-4-piperidyl)-1,2,3,4-butane tetracarboxylate, bis(2,2,6,6-tetramethyl-4-piperidyl) bis(tridecyl)-1,2,3,4-butane tetracarboxylate, bis(1,2,2,6,6-pentamethyl-4-piperidyl) bis(tridecyl)-1,2,3,4-butane tetracarboxylate, bis(1,2,2,6,6-pentamethyl-4-piperidyl)-2-butyl-2-(3,5-di-tertiary-butyl-4-hydroxybenzyl)malonate, 1,2,2,6,6-pentamethyl-4-piperidyl methacrylate, poly[{6-(1,1,3,3-tetramethylbutyl)amino-1,3,5-triazine-2,4-diyl } { (2,2,6,6-tetramethyl-4-piperidyl)imino }hexamethylene { (2,2,6,6-tetramethyl-4-piperidyl)imino}], 1,2,3,4-butanecarboxylic acid/2,2-bis(hydroxymethyl)-1,3-propanediol/3-hydroxy-2,2-dimethylpropanal/1,2,2,6,6-pentamethyl-4-piperidinyl ester polycondensate, bis(1,2,2,6,6-pentamethyl-4-piperidyl)=decanedioate/methyl=1,2,2,6,6-pentamethyl-4-piperidyl=sebacate mixture, 2,2,6,6-tetramethyl-4-piperidyl methacrylate, 1-(2-hydroxyethyl)-2,2,6,6-tetramethyl-4-piperidinol/succinic acid diethyl polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tertiary-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidine-4-yl)carbonate, 2,2,6,6-tetramethyl-4-piperidylhexadecanoate, and 2,2,6,6-tetramethyl-4-piperidyloctadecanoate. The additive amount of such a hindered amine light stabilizer is preferably 0.001 to 30 parts by mass, more preferably 0.05 to 10 parts by mass, with respect to 100 parts by mass of the synthetic resin.

In addition, in a case where a polyolefin resin is used as a synthetic resin, a known neutralizer is preferably further added to neutralize a residual catalyst in the polyolefin resin, if desired, to the extent of not impairing the effects of the

present invention. Examples of the neutralizer include fatty acid metal salts, such as calcium stearate, lithium stearate, and sodium stearate, and fatty acid amide compounds, such as ethylenebis(stearamide), ethylenebis(12-hydroxystearamide), and amide stearate. These neutralizers may be used in mixture.

Another additive that may be further added to a resin composition according to the present invention, if desired, to the extent of not impairing the effects of the present invention is, for example: a nucleating agent such as an aromatic carboxylic acid metal salt, alicyclic alkylcarboxylic acid metal salt, p-tertiary-butylbenzoic acid aluminium, aromatic phosphate metal salt, or dibenzylidene sorbitol; or metallic soap, hydrotalcite, triazine-ring-containing compound, metal hydroxide, phosphate flame retardant, condensed phosphate flame retardant, phosphate flame retardant, inorganic phosphorus flame retardant, (poly)phosphoric acid salt flame retardant, halogen flame retardant, silicon flame retardant, antimony oxide such as antimony trioxide, another inorganic flame retardant auxiliary, another organic flame retardant auxiliary, bulking agent, pigment, lubricant, or foaming agent.

Examples of the triazine-ring-containing compound include melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the metal hydroxide include magnesium hydroxide, aluminium hydroxide, calcium hydroxide, barium hydroxide, zinc hydroxide, and KISUMA5A (magnesium hydroxide, manufactured by Kyowa Chemical Industry Co., Ltd.).

Examples of the phosphate flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis-(t-butylphenyl)phenyl phosphate, tris-(t-butylphenyl) phosphate, isopropylphenyldiphenyl phosphate, bis-(isopropylphenyl)diphenyl phosphate, and tris-(isopropylphenyl) phosphate.

Examples of condensed phosphate flame retardant include 1,3-phenylenebis(diphenylphosphate), 1,3-phenylenebis(dixylenylphosphate), and bisphenol A bis(diphenylphosphate).

Examples of the (poly)phosphoric acid salt flame retardant include ammonium salts and amine salts of (poly) phosphoric acid such as ammonium polyphosphate, melamine polyphosphate, piperazine polyphosphate, melamine pyrophosphate, and piperazine pyrophosphate.

Examples of another inorganic flame retardant auxiliary include inorganic compounds such as titanium oxide, aluminium oxide, magnesium oxide, hydrotalcite, talc, and montmorillonite, and surface-treated products thereof. For example, any kind of commercially available product such as TIPAQUE R-680 (titanium oxide, manufactured by Ishihara Sangyo Kaisha Ltd.), KYOWAMAG150 (magnesium oxide, manufactured by Kyowa Chemical Industry Co., Ltd.), DHT-4A (hydrotalcite, manufactured by Kyowa Chemical Industry Co., Ltd.), or ALCAMIZER4 (zinc modified hydrotalcite, manufactured by Kyowa Chemical Industry Co., Ltd.) can be used. In addition, examples of another organic flame retardant auxiliary include pentaerythritol.

Besides, an additive that is commonly used for a synthetic resin can be blended with a resin composition according to the present invention, if desired, to the extent of not impairing the effects of the present invention. Examples of the additive include a cross-linking agent, anti-fogging agent, anti-plate-out agent, surface-treating agent, plasticizer, lubricant, flame retardant, fluorescent agent, antifungal agent, bactericide, foaming agent, metal deactivator, release agent, pigment, processing aid, antioxidant, light stabilizer, or the like.

An additive to be blended with a resin composition according to the present invention may be directly added to a synthetic resin, or may be added to a synthetic resin after being blended with the polymer compound (E) that is an antistatic agent according to the present invention, or with an antistatic-agent composition.

Molding a resin composition according to the present invention can afford a molded resin product having antistaticity. The molding method include, but are not particularly limited to, extruding, calendering, injection molding, rolling, compression molding, blow molding, and rotational molding. A molded article in any shape, such as a resin plate, seat, film, bottle, fiber, or special-shape article, can be produced.

A molded product obtained using a resin composition according to the present invention has excellent antistatic performance and the durability thereof. A molded product obtained using a resin composition according to the present invention is a molded product that is less prone to generate static electricity, and less prone to a decrease caused in commercial value by contamination due to and dirt sticking due to static electricity on the surface.

Among the molded products obtained using a resin composition according to the present invention, a film in particular is excellent from the viewpoints of antistaticity, the durability thereof, and the transparency of the film, and thus, is preferable. Such a film is a film that is less prone to generate static electricity, is less prone to a decrease caused in commercial value by contamination due to and dirt sticking due to static electricity on the surface, and furthermore, has excellent transparency. Accordingly, the film is suitable for packages and the like for electrical and electronic components, electrical and electronic products, precision components, precision devices, and the like.

A resin composition according to the present invention and a molded product produced using the resin composition can be used in a wide range of industrial fields, such as the electric, electronic, and communications industries, the agriculture, forestry, and fisheries industries, mining, construction, food, fiber, clothing, medical care, coal, petroleum, rubber, leather, automobiles, precision devices, wood, construction materials, civil engineering, furniture, printing, and musical instruments.

More specifically, a resin composition according to the present invention and a molded product thereof are used for applications, examples of which include: electrical and electronic components and communications machines, such as printers, personal computers, word processors, keyboards, PDAs (personal digital assistants), telephones, copiers, facsimile machines, ECRs (electronic cash registers), electric calculators, electronic organizers, cards, holders, office items such as stationery, OA machines, washing machines, refrigerators, cleaners, microwave ovens, lighting fittings, game consoles, irons, home electrical appliances such as kotatsu, TVs, VTRs, video cameras, radio-cassette players, tape recorders, mini discs, CD players, speakers, AV machines such as liquid crystal displays, connectors, relays, capacitors, switches, printed boards, coil bobbins, semiconductor-sealing materials, LED sealing materials, electrical wires, cables, transformers, deflecting yokes, distribution switch boards, and clocks; and interior and exterior materials for automobiles, platemaking films, adhesive films, bottles, food containers, food-packaging films, wrap films for pharmaceuticals and medicaments, product-packaging films, agricultural films, agricultural seats, green-house films, and packaging films for electrical and electronic components.

Furthermore, a resin composition according to the present invention and a molded product thereof can be used for various applications, examples of which include: materials for automobiles, vehicles, ships, aircrafts, buildings, housings, and construction, and materials for civil engineering, such as seats (padding, outer materials, and the like), belts, ceiling cladding, convertible tops, arm rests, door trims, rear package trays, carpets, mats, sun visors, wheel covers, mattress covers, air bags, insulating materials, hangers, hanger bands, wire covering materials, electric insulating materials, paints, coating materials, facing materials, floor materials, baffle walls, carpets, wallpaper, wall covering materials, exterior materials, interior materials, roof materials, deck materials, wall materials, pillar materials, bottom boards, fence materials, frameworks and moldings, windows and door sections, wood shingles, panels, terraces, balconies, acoustical insulation boards, thermal insulating boards, and window materials; and household goods and sports goods, such as clothing, curtains, sheets, nonwoven fabrics, plywood, synthetic fiber boards, carpets, door mats, seats, buckets, hoses, containers, eyeglasses, bags, cases, goggles, skis, rackets, tents, and musical instruments.

EXAMPLES

The present invention will be described below in further detail with reference to Examples, and the present invention is not limited to these.

In accordance with the below-mentioned Production Examples, polymer compounds (E) that are antistatic agents according to the present invention were produced. In addition, in the below-described Production Examples, the number-average molecular weight of a polyether (b) was calculated in accordance with the following <Method of calculating number-average molecular weight from hydroxyl value>, and the number-average molecular weight of each of a polyester (a) and a block polymer (C) was calculated in accordance with the following <Method of measuring number-average molecular weight in terms of polystyrene>. The molecular weight of polypropylene glycol diglycidyl ether was calculated from an epoxy equivalent.

<Method of calculating number-average molecular weight from hydroxyl value>

A hydroxyl value was measured using the following method of measuring a hydroxyl value, and a number-average molecular weight (hereinafter also referred to as an "Mn") was determined in accordance with the following formula.

$$\text{Number-average molecular weight} = (56110 \times 2)/\text{hydroxyl value}$$

<Method of measuring hydroxyl value>

- Reagent A (an acetylating agent)

  (1) Triethyl phosphate, 1560 mL
  (2) Acetic anhydride, 193 mL

(3) Perchloric acid (60%), 16 g

The above-described reagents were mixed in the order of (1), (2), and (3).

- Reagent B
  Pyridine and pure water were mixed at a volume ratio of 3:1.
- Reagent C
  To 500 mL of isopropyl alcohol, two to three drops of phenolphthalein liquid were added, and the resulting solution was made neutral with an aqueous 1N-KOH solution.

First, 2 g of the sample was measured out into a 200 mL Erlenmeyer flask, and 10 mL of triethyl phosphate was added thereto. The resulting solution was dissolved with heating. The reagent A in an amount of 15 mL was added. The flask was sealed with a stopper, and shaken vigorously. The reagent B in an amount of 20 mL was added. The flask was sealed with the stopper, and shaken vigorously. The reagent C in an amount of 50 mL was added. The resulting solution was titrated with an aqueous 1N-KOH solution, and calculation was performed in accordance with the following formula.

$$\text{Hydroxyl value [mg KOH/g]} = 56.11 \times f \times (T - B)/S$$

f: factor of aqueous 1N-KOH solution
B: blank-test titer [mL]
T: sample-test titer [mL]
S: amount of sample [g]

<Method of measuring number-average molecular weight in terms of polystyrene>

The number-average molecular weight (hereinafter also referred to as an "Mn") was measured using a gel permeation chromatography (GPC) method. The measurement conditions for an Mn are described below.

Device: GPC device, manufactured by JASCO Corporation
Solvent: chloroform
Reference material: polystyrene
Detector: differential refractometer (RI detector)
Stationary phase in column: Shodex LF-804, manufactured by Showa Denko K.K.
Column temperature: 40°C
Sample concentration: 1 mg/1 mL
Flow rate: 0.8 mL/min.
Amount of injection: 100 μL.

[Production Example 1]

In a separable flask, 111 g of 1,4-cyclohexanedimethanol, 122 g of adipic acid, 0.1 g of phthalic anhydride, and 0.4 g of an antioxidant (tetrakis[3-(3,5-di-tertiary-butyl-4-hydroxyphenyl)propionyloxymethyl]methane, ADEKASTAB AO-60, manufactured by ADEKA Corporation) were well mixed and polymerized with gradual heating from 170°C to 215°C under normal pressure for 4 hours, and then at 215°C under reduced pressure for 3 hours to obtain a polyester (a)-1. The number-average molecular weight Mn of the resulting polyester (a)-1 was 2931.

Next, 205 g of the resulting polyester (a)-1, 144 g of polyethylene glycol having a number-average molecular weight of 3650 as a compound (b1)-1 of a polyether (b) having a hydroxyl group at both ends, 40 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.4 g of zirconium octylate were well mixed and polymerized with gradual heating from 215°C to 240°C under reduced pressure for 7 hours to obtain a block polymer (C)-1 having a structure having a carboxyl group at both ends. The number-average molecular weight Mn of this block polymer (C)-1 having a structure having a carboxyl group at both ends was 22109.

With 392 g of the resulting block polymer (C)-1 having a structure having a carboxyl group at both ends, 4.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 396 g of a polymer compound (E)-1.

[Production Example 2]

A polyester (a)-1 in an amount of 207 g obtained in the same manner as in Production Example 1, 153 g of polyethylene glycol having a number-average molecular weight of 3650 as a compound (b1)-1 of a polyether (b) having a hydroxyl group at both ends, 32 g of polytetramethylene glycol having a number-average molecular weight of 3042 as a compound (b2)-1 (the ratio of a polytetramethylene glycol (b2) was 20 mol% with respect to the total number of moles of the polyethylene glycol and the polytetramethylene glycol), 0.4 g of an antioxidant (ADEKASTAB AO-60), and 3.4 g of zirconium octylate were well mixed and polymerized with gradual heating from 215°C to 240°C under reduced pressure for 7 hours to obtain a block polymer (C)-2 having a structure having a carboxyl group at both ends. The number-average molecular weight Mn of this block polymer (C)-2 having a structure having a carboxyl group at both ends was 22302.

With 429 g of the resulting block polymer (C)-2 having a structure having a carboxyl group at both ends, 3.9 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 434 g of a polymer compound (E)-2.

[Production Example 3]

A polyester (a)-1 in an amount of 196 g obtained in the same manner as in Production Example 1, 96 g of polyethylene glycol having a number-average molecular weight of 3650 as a compound (b1)-1 of a polyether (b) having a hydroxyl group at both ends, 80 g of polytetramethylene glycol having a number-average molecular weight of 3042 as a compound (b2)-1 (the ratio of a polytetramethylene glycol (b2) was 50 mol% with respect to the total number of moles of the polyethylene glycol and the polytetramethylene glycol), 0.4 g of an antioxidant (ADEKASTAB AO-60), and 3.3 g of zirconium octylate were well mixed and polymerized with gradual heating from 215°C to 240°C under reduced pressure for 7 hours to obtain a block polymer (C)-3 having a structure having a carboxyl group at both ends. The number-average molecular weight Mn of this block polymer (C)-3 having a structure having a carboxyl group at both ends was 21134.

With 376 g of the resulting block polymer (C)-3 having a structure having a carboxyl group at both ends, 4.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 380 g of a polymer compound (E)-3.

[Production Example 4]

A polyester (a)-1 in an amount of 209 g obtained in the same manner as in Production Example 1, 163 g of polyethylene glycol having a number-average molecular weight of 3650 as a compound (b1)-1 of a polyether (b) having a hydroxyl group at both ends, 24 g of polytetramethylene glycol having a number-average molecular weight of 3042 as a compound (b2)-1 (the ratio of a polytetramethylene glycol (b2) was 15 mol% with respect to the total number of moles of the polyethylene glycol and the polytetramethylene glycol), 0.4 g of an antioxidant (ADEKASTAB AO-60), and 3.5 g of zirconium octylate were well mixed and polymerized with gradual heating from 215°C to 240°C under reduced pressure for 7 hours to obtain a block polymer (C)-4 having a structure having a carboxyl group at both ends. The number-average molecular weight Mn of this block polymer (C)-4 having a structure having a carboxyl group at both ends was 22485.

With 396 g of the resulting block polymer (C)-4 having a structure having a carboxyl group at both ends, 4.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 400 g of a polymer compound (E)-4.

[Production Example 5]

A polyester (a)-1 in an amount of 189 g obtained in the same manner as in Production Example 1, 57 g of polyethylene glycol having a number-average molecular weight of 3650 as a compound (b1)-1 of a polyether (b) having a hydroxyl group at both ends, 112 g of polytetramethylene glycol having a number-average molecular weight of 3042 as a compound (b2)-1 (the ratio of a polytetramethylene glycol (b2) was 70 mol% with respect to the total number of moles of the polyethylene glycol and the polytetramethylene glycol), 0.4 g of an antioxidant (ADEKASTAB AO-60), and 3.2 g of zirconium octylate were well mixed and polymerized with gradual heating from 215°C to 240°C under reduced pressure for 7 hours to obtain a block polymer (C)-5 having a structure having a carboxyl group at both ends. The number-average molecular weight Mn of this block polymer (C)-5 having a structure having a carboxyl group at both ends was 20372.

With 396 g of the resulting block polymer (C)-5 having a structure having a carboxyl group at both ends, 4.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced

pressure for 3 hours to obtain 400 g of a polymer compound (E)-5.

[Production Example 6]

A polyester (a)-1 in an amount of 202 g obtained in the same manner as in Production Example 1, 135 g of polyethylene glycol having a number-average molecular weight of 2000 as a compound (b1)-2 of a polyether (b) having a hydroxyl group at both ends, 45 g of polytetramethylene glycol having a number-average molecular weight of 2000 as a compound (b2)-2 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.2 g of zirconium octylate were well mixed and polymerized with gradual heating from 215°C to 240°C under reduced pressure for 7 hours to obtain a block polymer (C)-6 having a structure having a carboxyl group at both ends. The number-average molecular weight Mn of this block polymer (C)-6 having a structure having a carboxyl group at both ends was 12631.
With 397 g of the resulting block polymer (C)-6 having a structure having a carboxyl group at both ends, 6.3 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 405 g of a polymer compound (E)-6.

[Production Example 7]

A polyester (a)-1 in an amount of 200 g obtained in the same manner as in Production Example 1, 135 g of polyethylene glycol having a number-average molecular weight of 4000 as a compound (b1)-3 of a polyether (b) having a hydroxyl group at both ends, 45 g of polytetramethylene glycol having a number-average molecular weight of 4000 as a compound (b2)-3 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.2 g of zirconium octylate were well mixed and polymerized with gradual heating from 215°C to 240°C under reduced pressure for 7 hours to obtain a block polymer (C)-7 having a structure having a carboxyl group at both ends. The number-average molecular weight Mn of this block polymer (C)-7 having a structure having a carboxyl group at both ends was 25243.
With 398 g of the resulting block polymer (C)-7 having a structure having a carboxyl group at both ends, 3.2 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 402 g of a polymer compound (E)-7.

[Production Example 8]

In a separable flask, 97 g of 1,4-cyclohexanedimethanol, 112 g of adipic acid, 0.1 g of phthalic anhydride, and 0.4 g of an antioxidant (tetrakis[3-(3,5-di-tertiary-butyl-4-hydroxyphenyl)propionyloxymethyl]methane, ADEKASTAB AO-60, manufactured by ADEKA Corporation) were well mixed and polymerized with gradual heating from 170°C to 215°C under normal pressure for 4 hours, and then at 215°C under reduced pressure for 3 hours to obtain a polyester (a)-2. The number-average molecular weight Mn of the resulting polyester (a)-2 was 2053.
Next, 185 g of the resulting polyester (a)-2, 185 g of polyethylene glycol having a number-average molecular weight of 3650 as a compound (b1)-1 of a polyether (b) having a hydroxyl group at both ends, 51 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.7 g of zirconium octylate were well mixed and polymerized with gradual heating from 215°C to 240°C under reduced pressure for 7 hours to obtain a block polymer (C)-8 having a structure having a carboxyl group at both ends. The number-average molecular weight Mn of this block polymer (C)-8 having a structure having a carboxyl group at both ends was 18600.
With 461 g of the resulting block polymer (C)-8 having a structure having a carboxyl group at both ends, 5.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 467 g of a polymer compound (E)-8.

[Production Example 9]

In a separable flask, 135 g of 1,4-cyclohexanedimethanol, 143 g of adipic acid, 1.5 g of phthalic anhydride, and 0.4 g of an antioxidant (tetrakis[3-(3,5-di-tertiary-butyl-4-hydroxyphenyl)propionyloxymethyl]methane, ADEKASTAB AO-60, manufactured by ADEKA Corporation) were well mixed and polymerized with gradual heating from 170°C to 215°C under normal pressure for 4 hours, and then at 215°C under reduced pressure for 3 hours to obtain a polyester (a)-3.

The number-average molecular weight Mn of the resulting polyester (a)-3 was 5347.

Next, 244 g of the resulting polyester (a)-3, 94 g of polyethylene glycol having a number-average molecular weight of 3650 as a compound (b1)-1 of a polyether (b) having a hydroxyl group at both ends, 26 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.1 g of zirconium octylate were well mixed and polymerized with gradual heating from 215°C to 240°C under reduced pressure for 7 hours to obtain a block polymer (C)-9 having a structure having a carboxyl group at both ends. The number-average molecular weight Mn of this block polymer (C)-9 having a structure having a carboxyl group at both ends was 31773.

With 401 g of the resulting block polymer (C)-9 having a structure having a carboxyl group at both ends, 2.6 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 404 g of a polymer compound (E)-9.

[Production Example 10]

With 401 g of the resulting block polymer (C)-1 having a structure having a carboxyl group at both ends, in which the block polymer was obtained in the same manner as in Production Example 1, 1.7 g of polypropylene glycol diglycidyl ether (having a number-average molecular weight of 304 and an epoxy equivalent of 200 g/eq) as an epoxy compound (D)-2 was well mixed, and the resulting mixture was polymerized at 240°C under reduced pressure for 3 hours to obtain 403 g of a polymer compound (E)-10.

[Production Example 11]

With 391 g of the resulting block polymer (C)-1 having a structure having a carboxyl group at both ends, in which the block polymer was obtained in the same manner as in Production Example 1, 2.4 g of polypropylene glycol diglycidyl ether (having a number-average molecular weight of 769 and an epoxy equivalent of 471 g/eq) as an epoxy compound (D)-3 was well mixed, and the resulting mixture was polymerized at 240°C under reduced pressure for 3 hours to obtain 394 g of a polymer compound (E)-11.

[Production Example 12]

With 391 g of the resulting block polymer (C)-1 having a structure having a carboxyl group at both ends, in which the block polymer was obtained in the same manner as in Production Example 1, 2.1 g of bisphenol F diglycidyl ether (having an epoxy equivalent of 170 g/eq) as an epoxy compound (D)-4 was well mixed, and the resulting mixture was polymerized at 240°C under reduced pressure for 3 hours to obtain 394 g of a polymer compound (E)-12.

[Production Example 13]

In a separable flask, 124 g of hydrogenated bisphenol A, 84 g of adipic acid, 0.1 g of phthalic anhydride, and 0.4 g of an antioxidant (tetrakis[3-(3,5-di-tertiary-butyl-4-hydroxyphenyl)propionyloxymethyl]methane, ADEKASTAB AO-60, manufactured by ADEKA Corporation) were well mixed and polymerized with gradual heating from 170°C to 215°C under normal pressure for 4 hours, and then at 215°C under reduced pressure for 3 hours to obtain a polyester (a)-4. The number-average molecular weight Mn of the resulting polyester (a)-4 was 2922.

Next, 190 g of the resulting polyester (a)-4, 133 g of polyethylene glycol having a number-average molecular weight of 3650 as a compound (b1)-1 of a polyether (b) having a hydroxyl group at both ends, 37 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.1 g of zirconium octylate were well mixed and polymerized with gradual heating from 215°C to 240°C under reduced pressure for 7 hours to obtain a block polymer (C)-10 having a structure having a carboxyl group at both ends. The number-average molecular weight Mn of this block polymer (C)-10 having a structure having a carboxyl group at both ends was 21500.

With 391 g of the resulting block polymer (C)-10 having a structure having a carboxyl group at both ends, 3.7 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 396 g of a polymer compound (E)-13.

[Production Example 14]

In a separable flask, 111 g of 1,4-cyclohexanedimethanol, 122 g of adipic acid, and 0.4 g of an antioxidant (tetrakis [3-(3,5-di-tertiary-butyl-4-hydroxyphenyl)propionyloxymethyl]methane, ADEKASTAB AO-60, manufactured by ADEKA Corporation) were well mixed and polymerized with gradual heating from 170°C to 215°C under normal pressure for 4 hours, and then at 215°C under reduced pressure for 3 hours to obtain a polyester (a)-5. The number-average molecular weight Mn of the resulting polyester (a)-5 was 2931.

Next, 206 g of the resulting polyester (a)-5, 144 g of polyethylene glycol having a number-average molecular weight of 3650 as a compound (b1)-1 of a polyether (b) having a hydroxyl group at both ends, 40 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol), 0.4 g of an antioxidant (ADEKASTAB AO-60), and 3.3 g of zirconium octylate were well mixed and polymerized with gradual heating from 215°C to 240°C under reduced pressure for 7 hours to obtain a block polymer (C)-11 having a structure having a carboxyl group at both ends. The number-average molecular weight Mn of this block polymer (C)-11 having a structure having a carboxyl group at both ends was 22109.

With 392 g of the resulting block polymer (C)-11 having a structure having a carboxyl group at both ends, 4.4 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 396 g of a polymer compound (E)-14.

[Production Example 15]

In a separable flask, 111 g of 1,4-cyclohexanedimethanol, 123 g of adipic acid, 0.1 g of phthalic anhydride, 0.4 g of antioxidant (tetrakis[3-(3,5-di-tertiary-butyl-4-hydroxyphenyl)propionyloxymethyl]methane, ADEKASTAB AO-60, manufactured by ADEKA Corporation), 144 g of polyethylene glycol having a number-average molecular weight of 3650 as a compound (b1)-1 of a polyether (b) having a hydroxyl group at both ends, and 40 g of polytetramethylene glycol having a number-average molecular weight of 3042 as a compound (b2)-1 (the ratio of a polytetramethylene glycol (b2) was 25 mol% with respect to the total number of moles of the polyethylene glycol and the polytetramethylene glycol) were well mixed and polymerized with gradual heating from 170°C to 215°C under normal pressure for 4 hours. Zirconium octylate in an amount of 3.5 g was added, well mixed, and polymerized with gradual heating from 215°C to 240°C under reduced pressure for 7 hours to obtain a polymer. The number-average molecular weight Mn of the resulting polymer was 22109.

With 392 g of the resulting polymer, 4.0 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 396 g of a polymer compound (E)-15.

[Comparative Production Example 1]

A polyester (a)-1 in an amount of 205 g obtained in the same manner as in Production Example 1, 183 g of polyethylene glycol having a number-average molecular weight of 3650 as a compound (b1)-1 of a polyether (b) having a hydroxyl group at both ends, 0.4 g of an antioxidant (ADEKASTAB AO-60), and 3.3 g of zirconium octylate were well mixed and polymerized with gradual heating from 215°C to 240°C under reduced pressure for 7 hours to obtain a comparative block polymer-1 having a structure having a carboxyl group at both ends. The number-average molecular weight Mn of this comparative block polymer-1 having a structure having a carboxyl group at both ends was 23074.

With 409 g of the resulting comparative block polymer-1 having a structure having a carboxyl group at both ends, 3.7 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 413 g of a comparative polymer compound (E)'-1.

[Comparative Production Example 2]

A polyester (a)-1 in an amount of 170 g obtained in the same manner as in Production Example 1, 153 g of polytetramethylene glycol having a number-average molecular weight of 3042 as a compound (b2)-1 of a polyether (b) having a hydroxyl group at both ends, 0.4 g of an antioxidant (ADEKASTAB AO-60), and 3.2 g of zirconium octylate were well mixed and polymerized with gradual heating from 215°C to 240°C under reduced pressure for 7 hours to obtain a comparative block polymer-2 having a structure having a carboxyl group at both ends. The number-average molecular weight Mn of this comparative block polymer-2 having a structure having a carboxyl group at both ends was 19195.

With 403 g of the resulting comparative block polymer-2 having a structure having a carboxyl group at both ends,

4.3 g of polypropylene glycol diglycidyl ether (having a number-average molecular weight of 530 and an epoxy equivalent of 300 g/eq) as an epoxy compound (D)-1 was well mixed, and the resulting mixture was polymerized at 240°C under reduced pressure for 3 hours to obtain 408 g of a comparative polymer compound (E)'-2.

[Examples 1 to 42 and Comparative Examples 1 to 14]

Using each of the resin compositions blended in accordance with the blending amounts (parts by mass) stated in Tables 1 to 8 below, a test film was obtained in accordance with the test-film-producing method described below. Using the resulting test film, the surface resistivity (SR value) was measured in accordance with the below-described measurement method, and the antistaticity and the durability thereof were evaluated. Furthermore, a haze value and a clarity value were measured and evaluated in accordance with the below-described measurement method. The results are shown together in Tables 1 to 8. In addition, in the same manner as in Examples, the comparative polymer compounds (E)'-1 and (E)'-2 were used for measurement and evaluation in the blending amounts stated in Tables 1 to 8. The results are shown together in Tables 1 to 8.

<Method of producing test film of linear low-density polyethylene (LLDPE) resin composition>

Each resin composition was melt-extruded at 180°C using an extruder manufactured by Toyo Seiki Seisaku-sho, Ltd., and including a T-type die, and was rapidly cooled using cooling rolls at 40°C to obtain a test film (5 cm × 12 cm × 50 μm).

<Method of producing test film of low-density polyethylene (LDPE) resin composition>

Each resin composition was melt-extruded at 180°C using an extruder manufactured by Toyo Seiki Seisaku-sho, Ltd., and including a T-type die, and was rapidly cooled using cooling rolls at 40°C to obtain a test film (5 cm × 12 cm × 50 μm).

<Method of measuring surface resistivity (SR value)>

Immediately after being molded, the resulting test film was stored under conditions of a temperature of 25°C and a humidity of 50%RH. After the test film was stored 1 day and 30 days after the molding, the surface resistivity (Ω/□) of the test film was measured under the same atmosphere under conditions of an applied voltage of 100 V for an application time of 1 minute, using a Hiresta-UX Hiresta (MCP-HT800) resistance meter manufactured by Mitsubishi Chemical Analytech Co., Ltd. Measurements were made at 5 points on each of five test films, and the average of the measurements was determined.

The surface resistivity, if (Ω/□) > $1 \times 10^{16}$ Ω/□, was unmeasurable and rated as Over Range (OR).

<Measurement of haze value>

In accordance with ISO14782, the haze value of the test film was measured.

<Measurement of clarity value>

The clarity value of the test film was measured using a haze meter "haze-gard i" manufactured by BYK Additives & Instruments GmbH.

[Table 1]

| | | Example 1 | Example 2 | Example 3 | Example 4 | Example 5 | Example 6 | Example 7 |
|---|---|---|---|---|---|---|---|---|
| Antistatic agent | (E)-1 | 15 | 15 | 15 | 10 | 20 | 15 | 15 |
| | (E)-2 | - | - | - | - | - | - | - |
| | (E)-3 | - | - | - | - | - | - | - |
| | (E)-4 | - | - | - | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | - | - | - | - | - | - | - |
| | (E)-14 | - | - | - | - | - | - | - |
| | (E)-15 | - | - | - | - | - | - | - |
| | (E)'-1 | - | - | - | - | - | - | - |
| | (E)'-2 | - | - | - | - | - | - | - |
| (b2) / [(b1) + (b2)]*1 (mol%) | | 25 | 25 | 25 | 25 | 25 | 25 | 25 |
| Alkali metal salt | Na DBS*2 | - | 1.3 | - | 0.9 | 1.8 | 0.8 | 1.8 |
| Ionic liquid | C2 mim DBS*3 | - | - | 1.3 | - | - | - | - |
| Thermoplastic resin | LLDPE*4 | 85 | 85 | 85 | 90 | 80 | 85 | 85 |
| | LDPE*5 | - | - | - | - | - | - | - |
| Surface resistance (Ω/□) | after 1 day | $4.7 \times 10^{11}$ | $4.7 \times 10^{10}$ | $5.1 \times 10^{10}$ | $2.8 \times 10^{11}$ | $7.8 \times 10^{9}$ | $9.6 \times 10^{10}$ | $2.2 \times 10^{10}$ |
| | after 30 days | $4.8 \times 10^{11}$ | $4.3 \times 10^{10}$ | $5.5 \times 10^{10}$ | $2.7 \times 10^{11}$ | $7.3 \times 10^{9}$ | $9.6 \times 10^{10}$ | $2.0 \times 10^{10}$ |
| Haze value (%) | | 16 | 17 | 20 | 14 | 20 | 17 | 22 |
| Clarity (%) | | 84 | 96 | 92 | 97 | 89 | 96 | 90 |

*1: (b2) / [(b1) + (b2)]: the ratio of polytetramethylene glycol with respect to the total number of moles of polyethylene glycol (b1) and polytetramethylene glycol (b2) mol%

*2: Na DBS: sodium dodecylbenzenesulfonate

*3: C2 mim DBS: 1-ethyl-3-methylimidazolium dodecylbenzene sulfonate

*4: LLDPE: C6-LLDPE (linear low-density polyethylene, the melt flow rate = 2.0 g/10 min)

*5: LDPE: (low-density polyethylene, the melt flow rate = 2.4 g/10 min)

[Table 2]

| | | Example 8 | Example 9 | Example 10 | Example 11 | Example 12 | Example 13 | Example 14 |
|---|---|---|---|---|---|---|---|---|
| Antistatic agent | (E)-1 | - | - | - | - | - | - | - |
| | (E)-2 | 15 | - | - | - | - | - | - |
| | (E)-3 | - | 15 | - | - | - | - | - |
| | (E)-4 | - | - | 15 | - | - | - | - |
| | (E)-5 | - | - | - | 15 | - | - | - |
| | (E)-6 | - | - | - | - | 15 | - | - |
| | (E)-7 | - | - | - | - | - | 15 | - |
| | (E)-8 | - | - | - | - | - | - | 15 |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | - | - | - | - | - | - | - |
| | (E)-14 | - | - | - | - | - | - | - |
| | (E)-15 | - | - | - | - | - | - | - |
| | (E)'-1 | - | - | - | - | - | - | - |
| | (E)'-2 | - | - | - | - | - | - | - |
| (b2) / [(b1) + (b2)]*1 (mol%) | | 20 | 50 | 15 | 70 | 25 | 25 | 25 |
| Alkali metal salt | Na DBS*2 | 1.3 | 1.3 | 1.3 | 1.3 | 1.3 | 1.3 | 1.3 |
| Ionic liquid | C2 mim DBS*3 | - | - | - | - | - | - | - |
| Thermoplastic resin | LLDPE*4 | 85 | 85 | 85 | 85 | 85 | 85 | 85 |
| | LDPE*5 | - | - | - | - | - | - | - |
| Surface resistance (Ω/□) | after 1 day | $4.4 \times 10^{10}$ | $7.1 \times 10^{10}$ | $4.1 \times 10^{10}$ | $9.2 \times 10^{10}$ | $1.2 \times 10^{10}$ | $6.5 \times 10^{10}$ | $4.8 \times 10^{10}$ |
| | after 30 days | $4.4 \times 10^{10}$ | $6.3 \times 10^{10}$ | $4.0 \times 10^{10}$ | $8.9 \times 10^{10}$ | $9.7 \times 10^{10}$ | $6.1 \times 10^{10}$ | $4.2 \times 10^{10}$ |
| Haze value (%) | | 18 | 17 | 19 | 20 | 19 | 23 | 21 |
| Clarity (%) | | 96 | 94 | 91 | 84 | 86 | 89 | 93 |

[Table 3]

| | | Example 15 | Example 16 | Example 17 | Example 18 | Example 19 | Example 20 | Example 21 |
|---|---|---|---|---|---|---|---|---|
| Antistatic agent | (E)-1 | - | - | - | - | - | - | - |
| | (E)-2 | - | - | - | - | - | - | - |
| | (E)-3 | - | - | - | - | - | - | - |
| | (E)-4 | - | - | - | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | 15 | - | - | - | - | - | - |
| | (E)-10 | - | 15 | - | - | - | - | - |
| | (E)-11 | - | - | 15 | - | - | - | - |
| | (E)-12 | - | - | - | 15 | - | - | - |
| | (E)-13 | - | - | - | - | 15 | - | - |
| | (E)-14 | - | - | - | - | - | 15 | - |
| | (E)-15 | - | - | - | - | - | - | 15 |
| | (E)'-1 | - | - | - | - | - | - | - |
| | (E)'-2 | - | - | - | - | - | - | - |
| (b2) / [(b1) + (b2)]*1 (mol%) | | 25 | 25 | 25 | 25 | 25 | 25 | 25 |
| Alkali metal salt | Na DBS*2 | 1.3 | 1.3 | 1.3 | 1.3 | 1.3 | 1.3 | 1.3 |
| Ionic liquid | C2 mim DBS*3 | - | - | - | - | - | - | - |
| Thermoplastic resin | LLDPE*4 | 85 | 85 | 85 | 85 | 85 | 85 | 85 |
| | LDPE*5 | - | - | - | - | - | - | - |
| Surface resistance (Ω/□) | after 1 day | $2.7 \times 10^{10}$ | $1.3 \times 10^{10}$ | $7.3 \times 10^{10}$ | $4.8 \times 10^{10}$ | $4.8 \times 10^{10}$ | $4.8 \times 10^{10}$ | $8.1 \times 10^{10}$ |
| | after 30 days | $3.2 \times 10^{10}$ | $1.1 \times 10^{10}$ | $7.2 \times 10^{10}$ | $4.7 \times 10^{10}$ | $4.4 \times 10^{10}$ | $4.4 \times 10^{10}$ | $7.8 \times 10^{10}$ |
| Haze value (%) | | 26 | 20 | 24 | 22 | 20 | 20 | 29 |
| Clarity (%) | | 89 | 94 | 88 | 89 | 89 | 92 | 83 |

[Table 4]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Antistatic agent | (E)-1 | - | - | - | - | - | - | - |
| | (E)-2 | - | - | - | - | - | - | - |
| | (E)-3 | - | - | - | - | - | - | - |
| | (E)-4 | - | - | - | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | - | - | - | - | - | - | - |
| | (E)-14 | - | - | - | - | - | - | - |
| | (E)-15 | - | - | - | - | - | - | - |
| | (E)'-1 | - | 15 | 15 | 15 | - | - | - |
| | (E)'-2 | - | - | - | - | 15 | 15 | 15 |
| (b2) / [(b1) + (b2)][*1] (mol%) | | - | 0 | 0 | 0 | 100 | 100 | 100 |
| Alkali metal salt | Na DBS[*2] | - | - | 1.3 | - | - | 1.3 | - |
| Ionic liquid | C2 mim DBS[*3] | - | - | - | 1.3 | - | - | 1.3 |
| Thermoplastic resin | LLDPE[*4] | 100 | 85 | 85 | 85 | 85 | 85 | 85 |
| | LDPE[*5] | - | | | - | - | - | - |
| Surface resistance (Ω/□) | after 1 day | >$10^{16}$ | 3.7 × $10^{11}$ | 9.3 × $10^{10}$ | 7.2 × $10^{10}$ | 6.5 × $10^{11}$ | 2.5 × $10^{11}$ | 2.2 × $10^{11}$ |
| | after 30 days | >$10^{16}$ | 3.6 × $10^{11}$ | 9.0 × $10^{10}$ | 7.9 × $10^{10}$ | 6.1 × $10^{11}$ | 2.1 × $10^{11}$ | 2.3 × $10^{11}$ |
| Haze value (%) | | 18 | 45 | 39 | 41 | 42 | 34 | 55 |
| Clarity (%) | | 99 | 55 | 70 | 73 | 48 | 62 | 60 |

[Table 5]

| | | Example 22 | Example 23 | Example 24 | Example 25 | Example 26 | Example 27 | Example 28 |
|---|---|---|---|---|---|---|---|---|
| Antistatic agent | (E)-1 | 15 | 15 | 15 | 10 | 20 | 15 | 15 |
| | (E)-2 | - | | | - | - | - | - |
| | (E)-3 | - | | | - | - | - | - |
| | (E)-4 | - | | | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | - | - | - | - | - | - | - |
| | (E)-14 | - | - | - | - | - | - | - |
| | (E)-15 | - | - | - | - | - | - | - |
| | (E)'-1 | - | - | - | - | - | - | - |
| | (E)'-2 | - | - | - | - | - | - | - |
| (b2) / [(b1) + (b2)][*1] (mol%) | | 25 | 25 | 25 | 25 | 25 | 25 | 25 |
| Alkali metal salt | Na DBS[*2] | - | 1.3 | - | 0.9 | 1.8 | 0.8 | 1.8 |
| Ionic liquid | C2 mim DBS[*3] | - | - | 1.3 | - | - | - | - |
| Thermoplastic resin | LLDPE[*4] | - | - | - | - | - | - | - |
| | LDPE[*5] | 85 | 85 | 85 | 90 | 80 | 85 | 85 |
| Surface resistance (Ω/□) | after 1 day | $4.6 \times 10^{11}$ | $5.6 \times 10^{10}$ | $6.0 \times 10^{10}$ | $2.9 \times 10^{11}$ | $8.2 \times 10^{9}$ | $4.2 \times 10^{11}$ | $2.9 \times 10^{10}$ |
| | after 30 days | $4.4 \times 10^{11}$ | $4.4 \times 10^{10}$ | $6.1 \times 10^{10}$ | $3.1 \times 10^{11}$ | $8.4 \times 10^{9}$ | $3.3 \times 10^{11}$ | $3.3 \times 10^{10}$ |
| Haze value (%) | | 18 | 19 | 22 | 15 | 29 | 22 | 30 |
| Clarity (%) | | 70 | 73 | 69 | 84 | 48 | 54 | 51 |

[Table 6]

| | | Example 29 | Example 30 | Example 31 | Example 32 | Example 33 | Example 34 | Example 35 |
|---|---|---|---|---|---|---|---|---|
| Antistatic agent | (E)-1 | - | - | - | - | - | - | - |
| | (E)-2 | 15 | - | - | - | - | - | - |
| | (E)-3 | - | 15 | - | - | - | - | - |
| | (E)-4 | - | - | 15 | - | - | - | - |
| | (E)-5 | - | - | - | 15 | - | - | - |
| | (E)-6 | - | - | - | - | 15 | - | - |
| | (E)-7 | - | - | - | - | - | 15 | - |
| | (E)-8 | - | - | - | - | - | - | 15 |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | | - | - | - | - | - | - |
| | (E)-14 | - | - | - | - | - | - | - |
| | (E)-15 | - | - | - | - | - | - | - |
| | (E)'-1 | - | - | - | - | - | - | - |
| | (E)'-2 | - | - | - | - | - | - | - |
| (b2) / [(b1) + (b2)][*1] (mol%) | | 20 | 50 | 15 | 70 | 25 | 25 | 25 |
| Alkali metal salt | Na DBS[*2] | 1.3 | 1.3 | 1.3 | 1.3 | 1.3 | 1.3 | 1.3 |
| Ionic liquid | C2 mim DBS[*3] | - | - | - | - | - | - | - |
| Thermoplastic resin | LLDPE[*4] | - | - | - | - | - | - | - |
| | LDPE[*5] | 85 | 85 | 85 | 85 | 85 | 85 | 85 |
| Surface resistance (Ω/□) | after 1 day | $4.4 \times 10^{10}$ | $6.7 \times 10^{10}$ | $4.4 \times 10^{10}$ | $7.7 \times 10^{10}$ | $4.6 \times 10^{10}$ | $5.3 \times 10^{10}$ | $3.2 \times 10^{10}$ |
| | after 30 days | $4.8 \times 10^{10}$ | $6.4 \times 10^{10}$ | $4.1 \times 10^{10}$ | $7.1 \times 10^{10}$ | $4.2 \times 10^{10}$ | $5.3 \times 10^{10}$ | $3.8 \times 10^{10}$ |
| Haze value (%) | | 22 | 23 | 24 | 26 | 25 | 27 | 25 |
| Clarity (%) | | 69 | 61 | 66 | 60 | 61 | 60 | 61 |

[Table 7]

| | | Example 36 | Example 37 | Example 38 | Example 39 | Example 40 | Example 41 | Example 42 |
|---|---|---|---|---|---|---|---|---|
| Antistatic agent | (E)-1 | - | - | - | - | - | - | - |
| | (E)-2 | - | - | - | - | - | - | - |
| | (E)-3 | - | - | - | - | - | - | - |
| | (E)-4 | - | - | - | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | 15 | - | - | - | - | - | - |
| | (E)-10 | - | 15 | - | - | - | - | - |
| | (E)-11 | - | - | 15 | - | - | - | - |
| | (E)-12 | - | - | - | 15 | - | - | - |
| | (E)-13 | - | - | - | - | 15 | - | - |
| | (E)-14 | - | - | - | - | - | 15 | - |
| | (E)-15 | - | - | - | - | - | - | 15 |
| | (E)'-1 | - | - | - | - | - | - | - |
| | (E)'-2 | - | - | - | - | - | - | - |
| (b2) / [(b1) + (b2)]*1 (mol%) | | 25 | 25 | 25 | 25 | 25 | 25 | 25 |
| Alkali metal salt | Na DBS*2 | 1.3 | 1.3 | 1.3 | 1.3 | 1.3 | 1.3 | 1.3 |
| Ionic liquid | C2 mim DBS*3 | - | - | - | - | - | - | - |
| Thermoplastic resin | LLDPE*4 | - | - | - | - | - | - | - |
| | LDPE*5 | 85 | 85 | 85 | 85 | 85 | 85 | 85 |
| Surface resistance (Ω/□) | after 1 day | $4.9 \times 10^{10}$ | $2.1 \times 10^{10}$ | $1.1 \times 10^{11}$ | $7.2 \times 10^{10}$ | $5.5 \times 10^{10}$ | $5.7 \times 10^{10}$ | $9.6 \times 10^{10}$ |
| | after 30 days | $4.1 \times 10^{10}$ | $1.8 \times 10^{10}$ | $9.8 \times 10^{10}$ | $7.4 \times 10^{10}$ | $5.5 \times 10^{10}$ | $5.1 \times 10^{10}$ | $9.2 \times 10^{10}$ |
| Haze value (%) | | 26 | 20 | 19 | 28 | 22 | 21 | 35 |
| Clarity (%) | | 57 | 63 | 62 | 55 | 58 | 62 | 48 |

[Table 8]

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Antistatic agent | (E)-1 | - | - | - | - | - | - | - |
| | (E)-2 | - | - | - | - | - | - | - |
| | (E)-3 | - | - | - | - | - | - | - |
| | (E)-4 | - | - | - | - | - | - | - |
| | (E)-5 | - | - | - | - | - | - | - |
| | (E)-6 | - | - | - | - | - | - | - |
| | (E)-7 | - | - | - | - | - | - | - |
| | (E)-8 | - | - | - | - | - | - | - |
| | (E)-9 | - | - | - | - | - | - | - |
| | (E)-10 | - | - | - | - | - | - | - |
| | (E)-11 | - | - | - | - | - | - | - |
| | (E)-12 | - | - | - | - | - | - | - |
| | (E)-13 | - | - | - | - | - | - | - |
| | (E)-14 | - | - | - | - | - | - | - |
| | (E)-15 | - | - | - | - | - | - | - |
| | (E)'-1 | - | 15 | 15 | 15 | - | - | - |
| | (E)'-2 | - | - | - | - | 15 | 15 | 15 |
| (b2) / [(b1) + (b2)]*1 (mol%) | | - | 0 | 0 | 0 | 100 | 100 | 100 |
| Alkali metal salt | Na DBS*2 | - | - | 1.3 | - | - | 1.3 | - |
| Ionic liquid | C2 mim DBS*3 | - | - | - | 1.3 | - | - | 1.3 |
| Thermoplastic resin | LLDPE*4 | - | - | - | - | - | - | - |
| | LDPE*5 | 100 | 85 | 85 | 85 | 85 | 85 | 85 |
| Surface resistance (Ω/□) | after 1 day | >$10^{16}$ | $3.2 \times 10^{11}$ | $3.2 \times 10^{10}$ | $2.8 \times 10^{10}$ | $4.5 \times 10^{11}$ | $4.5 \times 10^{10}$ | $3.8 \times 10^{10}$ |
| | after 30 days | >$10^{16}$ | $3.4 \times 10^{11}$ | $2.4 \times 10^{10}$ | $2.9 \times 10^{10}$ | $4.2 \times 10^{11}$ | $5.2 \times 10^{10}$ | $4.1 \times 10^{10}$ |
| Haze value (%) | | 8 | 82 | 80 | 77 | 82 | 81 | 83 |
| Clarity (%) | | 92 | 20 | 17 | 21 | 15 | 11 | 14 |

The results shown in Tables 1 to 8 have revealed that the present invention makes it possible to obtain an antistatic agent having an excellent antistatic effect and the durability thereof, and having excellent transparency in film form.

## Claims

1. An antistatic agent comprising one or more polymer compounds (E) obtained by reaction among a diol (a1), a dicarboxylic acid (a2), a polyether (b) having a hydroxyl group at both ends, and an epoxy compound (D) having two or more epoxy groups,
wherein the polyether (b) having a hydroxyl group at both ends includes a polyethylene glycol (b1) and a polytetramethylene glycol (b2), and wherein the ratio of the polytetramethylene glycol (b2) is 10 to 80 mol% to the total number of moles of the polyethylene glycol (b1) and the polytetramethylene glycol (b2).

2. The antistatic agent according to claim 1, wherein the polymer compound (E) is obtained by reaction among: a polyester (a) obtained by reaction between the diol (a1) and the dicarboxylic acid (a2); the polyether (b) having a hydroxyl group at both ends; and the epoxy compound (D) having two or more epoxy groups.

3. The antistatic agent according to claim 2, wherein the polymer compound (E) has a structure having a polyester block (A) composed of the polyester (a) and a polyether block (B) composed of the polyether (b), wherein the polyester block (A) and the polyether block (B) are bound via an ester bond formed by or an ether bond formed by reaction among: a hydroxyl group at or a carboxyl group at an end of the polyester (a); a hydroxyl group at an end of the polyether (b); and an epoxy group of the epoxy compound (D), or a hydroxyl group formed by reaction of the epoxy group.

4. The antistatic agent according to claim 3, the polymer compound (E) has a structure in which a block polymer (C) having a carboxyl group at both ends and the epoxy compound (D) are bound via an ester bond, wherein the block polymer (C) has the polyester block (A) and the polyether block (B) that are repeatedly and alternately bound via an ester bond.

5. The antistatic agent according to claim 1, wherein the epoxy compound (D) in the polymer compound (E) is polypropylene glycol diglycidyl ether.

6. The antistatic agent according to claim 2, wherein the epoxy compound (D) in the polymer compound (E) is polypropylene glycol diglycidyl ether.

7. The antistatic agent according to claim 3, wherein the epoxy compound (D) in the polymer compound (E) is polypropylene glycol diglycidyl ether.

8. The antistatic agent according to claim 4, wherein the epoxy compound (D) in the polymer compound (E) is polypropylene glycol diglycidyl ether.

9. An antistatic-agent composition obtained by blending the antistatic agent according to any one of claims 1 to 8 further with one or more selected from the group consisting of alkali metal salts and ionic liquids.

10. An antistatic resin composition obtained by blending the antistatic agent according to any one of claims 1 to 8 further with a synthetic resin.

11. An antistatic resin composition obtained by blending the antistatic-agent composition according to claim 9 with a synthetic resin.

12. The antistatic resin composition according to claim 10, wherein the synthetic resin is a polyolefin resin.

13. The antistatic resin composition according to claim 11, wherein the synthetic resin is a polyolefin resin.

14. A molded product comprising the antistatic resin composition according to claim 12.

15. A molded product comprising the antistatic resin composition according to claim 13.

16. The molded product according to claim 14, being a film.

17. The molded product according to claim 15, being a film.

**INTERNATIONAL SEARCH REPORT**

International application No.
**PCT/JP2023/031002**

**A. CLASSIFICATION OF SUBJECT MATTER**

***C09K 3/16***(2006.01)i; ***C08G 63/672***(2006.01)i; ***C08G 83/00***(2006.01)i; ***C08K 3/017***(2018.01)i; ***C08L 23/00***(2006.01)i; ***C08L 101/00***(2006.01)i
FI: C09K3/16 102L; C08G63/672; C08G83/00; C08L23/00; C08K3/017; C08L101/00

According to International Patent Classification (IPC) or to both national classification and IPC

**B. FIELDS SEARCHED**

Minimum documentation searched (classification system followed by classification symbols)

C09K3/16; C08G63/672; C08G83/00; C08K3/017; C08L23/00; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2021-102684 A (ADEKA CORP.) 15 July 2021 (2021-07-15) claims, examples | 1-17 |
| A | WO 2016/158224 A1 (ADEKA CORP.) 06 October 2016 (2016-10-06) claims, examples | 1-17 |
| A | WO 2014/115745 A1 (ADEKA CORP.) 31 July 2014 (2014-07-31) claims, examples | 1-17 |
| A | JP 2009-108259 A (SANYO CHEMICAL INDUSTRIES, LTD.) 21 May 2009 (2009-05-21) claims, examples | 1-17 |
| A | JP 2008-133469 A (SANYO CHEMICAL INDUSTRIES, LTD.) 12 June 2008 (2008-06-12) claims, examples | 1-17 |
| A | JP 2017-14433 A (SANYO CHEMICAL INDUSTRIES, LTD.) 19 January 2017 (2017-01-19) claims, examples | 1-17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/031002**

**C. DOCUMENTS CONSIDERED TO BE RELEVANT**

| Category* | Citation of document, with indication, where appropriate, of the relevant passages | Relevant to claim No. |
|---|---|---|
| A | WO 02/090432 A1 (MITSUI CHEMICALS, INC.) 14 November 2002 (2002-11-14) claims, examples | 1-17 |
| A | CN 114426661 A (CHINESE PETROCHEMICAL INDUSTRY LTD., CO.) 03 May 2022 (2022-05-03) claims, examples | 1-17 |

Form PCT/ISA/210 (second sheet) (January 2015)

**INTERNATIONAL SEARCH REPORT**
**Information on patent family members**

International application No.
**PCT/JP2023/031002**

| Patent document cited in search report | Publication date (day/month/year) | Patent family member(s) | Publication date (day/month/year) |
|---|---|---|---|
| JP 2021-102684 A | 15 July 2021 | (Family: none) | |
| WO 2016/158224 A1 | 06 October 2016 | US 2018/0086958 A1<br>claims, examples<br>EP 3279269 A1 | |
| WO 2014/115745 A1 | 31 July 2014 | US 2015/0353796 A1<br>claims, examples<br>EP 2949721 A1<br>CN 104955915 A | |
| JP 2009-108259 A | 21 May 2009 | (Family: none) | |
| JP 2008-133469 A | 12 June 2008 | (Family: none) | |
| JP 2017-14433 A | 19 January 2017 | (Family: none) | |
| WO 02/090432 A1 | 14 November 2002 | (Family: none) | |
| CN 114426661 A | 03 May 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H03290464 A
- JP 2001278985 A
- JP 2016023254 A
- WO 9515572 A
- JP H0710989 A
- US 6552131 B1
- JP H03258850 A